(19) Europäisches Patentamt
European Patent Office
Office européen des brevets

(11) EP 1 990 595 A1

(12) **EUROPEAN PATENT APPLICATION**
published in accordance with Art. 158(3) EPC

(43) Date of publication:
**12.11.2008 Bulletin 2008/46**

(21) Application number: **07737512.9**

(22) Date of filing: **28.02.2007**

(51) Int Cl.:
***F28D 20/00*** *(2006.01)* ***C09K 5/06*** *(2006.01)*
***F28D 20/02*** *(2006.01)*

(86) International application number:
**PCT/JP2007/053784**

(87) International publication number:
**WO 2007/102374 (13.09.2007 Gazette 2007/37)**

(84) Designated Contracting States:
**DE FR GB**

(30) Priority: **01.03.2006 JP 2006054536**
**29.03.2006 JP 2006091180**

(71) Applicant: **MATSUSHITA ELECTRIC INDUSTRIAL CO., LTD.**
**Osaka 571-8501 (JP)**

(72) Inventors:
- **MORITA, Yoshio,**
**Matsushita Electric Industrial Co., Ltd**
**Chuo-ku, Osaka 540-6207 (JP)**
- **SUZUKI, Motohiro,**
**Matsushita Electric Industrial Co. Ltd**
**Chuo-ku, Osaka 540-6207 (JP)**

(74) Representative: **TBK-Patent**
**Bavariaring 4-6**
**80336 München (DE)**

# (54) METHOD OF HEAT ACCUMULATION AND HEAT ACCUMULATION SYSTEM

(57) A thermal storage method according to the present invention includes the steps of: (A) putting a first composition A, including an n-hydrate (where n is a hydration number) of an inorganic salt in solid phase and having a phase change temperature Tm of 100 °C or less, in a thermal storage material container; (B) heating the first composition A to a temperature T2 that is higher than the phase change temperature Tm and removing water contained in the first composition A from the thermal storage material container, thereby obtaining a second composition B in which an m-hydrate (where m is also a hydration number and m<n) of the inorganic salt in solid phase and an aqueous solution of the inorganic salt are both included; (C) stopping removing the water from the thermal storage material container on sensing that the second composition B has been obtained; (D) reserving the second composition B; and (E) mixing the second composition B with water, thereby recovering at least a part of the heat that is stored in the second composition B.

*FIG.1*

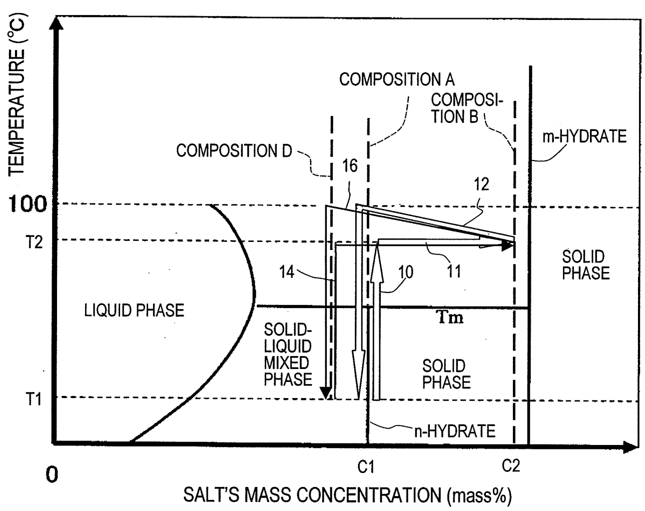


EP 1 990 595 A1

## Description

### TECHNICAL FIELD

The present invention relates to a method and system for thermal storage.

### BACKGROUND ART

Various thermal storage techniques for conserving thermal energy have been used effectively to save energies. Meanwhile, recently, hot water supply units that use a $CO_2$ heat pump or a fuel-cell cogeneration system (which will be referred to herein as a "fuel-cell cogene") have attracted a lot of attention in the art. In order to reduce the sizes of those units and install them more efficiently, development of high-density thermal storage technology is awaited.

Conventional thermal storage techniques are roughly classifiable into sensible heat storage, latent heat storage, and chemical heat storage techniques. According to the sensible and latent heat storage techniques, some loss such as heat exchange loss is inevitable in practice but there is no need to newly apply any thermal energy during the heat release process. That is why theoretically speaking, almost the same quantity of heat as what was applied during the heat storage process can be released as needed.

According to the sensible and latent heat storage techniques, the heat storage performance depends on specific heat and phase change heat, which are physical properties of a thermal storage material, and the storable heat quantity of a latent heat storage material becomes equal to the sum of the sensible heat and the phase change heat. However, since the phase change heat of a thermal storage material is generally smaller in a low temperature range than in a high temperature range, the thermal storage density decreases in the low temperature range. Also, according to the latent heat storage technique, the phase change temperature range is determined by the temperature of a heat source used, and a latent heat material with such a phase change temperature is selected. For example, as a latent heat storage material for use in a reservoir for a hot water supply unit, the hydrate or inorganic substance disclosed in Non-Patent Document No. 1 may be used to store the heat of around 80 to 110 °**C**. Meanwhile, Patent Document No. 1 suggests the use of a mixed phase change substance as a latent heat storage material in such a temperature range.

On the other hand, the chemical heat storage is a thermal storage technique that uses the heat generated as a result of a reversible chemical reaction. The chemical heat storage may use the chemical reaction of an adsorptive material, a hydrogen occlusion alloy, an organic reaction system or an inorganic reaction system. No matter which of these chemical reactions is used, the conventional chemical heat storage utilizes either a gas-liquid reaction or a gas-solid reaction. If the heat were stored as a gas as it is, then the volume of the stored gas would be so great that the thermal storage density would be rather low. That is why the gas generated during the thermal storage process is either condensed or turned into a solid compound such as a metal hydride, thereby trying to decrease the volume. However, the heat generated as a result is released into the external air. For that reason, in using the heat (i.e., in the heat release process), external thermal energy needs to be newly applied to trigger a reaction opposite to what happened during the thermal storage process by producing a gas from either a liquid or a solid compound. Consequently, if a conventional chemical heat storage system is used, the thermal energy that can be stored is obtained by subtracting the thermal energy (i.e., heat loss) needed to get the heat release reaction done from the one stored during the heat storage process as a matter of principle. Patent Document No. 2 discloses a chemical heat storage method that uses a reaction in which a solid hydrate is produced as a result of the reaction between a solid inorganic anhydride and water vapor. The document also discloses that the heat of formation (i.e., heat of condensation) generated by condensing water vapor as a gas is recovered in a heat pump, which is a thermal storage heat source. According to this method, however, an external heat source is also newly used during the heat release process.

Thus, according to the conventional sensible and latent heat storage techniques, the types of usable thermal storage materials are limited by the temperature of the heat source and a high thermal storage density cannot be ensured in a broad temperature range, which is a problem. Also, if the conventional chemical heat storage is adopted, external energy should be applied during the heat release process and therefore, the amount of substantial heat stored would decrease, which is also a problem.

Meanwhile, chemical heat storage techniques that eliminate the need for the external application of thermal energy during the heat release process by utilizing the dehydration reaction of a hydrate are disclosed in Patent Documents Nos. 3 and 4.

Specifically, Patent Document No. 3 teaches storing heat by turning a hydrate (such as a calcium chloride hexahydrate) into an anhydrate (such as calcium chloride) and also teaches turning the anhydrate into a hydrate and recovering the heat of formation generated as a result of the reaction during the heat release process. More specifically, during the heat storage process, a hydrate in a thermal storage material container is heated and dehydrated so as to turn into an anhydrate. In the heat release process, on the other hand, water vapor is supplied into the thermal storage material container, thereby turning the anhydrate in the thermal storage material container into a hydrate.

Meanwhile, Patent Document No. 4 discloses how to produce a calcium chloride tetrahydrate by heating and drying a calcium chloride hexahydrate during the thermal storage process and how to generate heat by making the calcium chloride tetrahydrate absorb water during the heat release process. Patent Document No. 4 also proposes that a thermal storage material be held by a holding member such as a ceramic sheet to dry the thermal storage material in a shorter time during the thermal storage process and to make the material absorb water more quickly during the heat release process.
The quantity of thermal energy (or simply the heat quantity) that can be stored through a heat cycle including the thermal storage process and the heat release process will be referred to herein as a "quantity of thermal storage" and the quantity of thermal storage of in a thermal storage material per unit volume (or unit weight) will be referred to herein as a "thermal storage density".

**Patent Document No. 1:** PCT International Application Japanese National Phase Publication No. 2003-507524
**Patent Document No. 2:** Japanese Patent Gazette for Opposition No. 7-6708
**Patent Document No. 3:** Japanese Patent Application Laid-Open Publication No. 2004-3832
**Patent Document No. 4:** Japanese Patent Application Laid-Open Publication No. 3-244998
**Non-Patent Document No. 1:** Bulletin of the Institute of Electrical Engineers of Japan, p. 15, Vol. 101, 1981

## DISCLOSURE OF INVENTION

## PROBLEMS TO BE SOLVED BY THE INVENTION

However, the present inventors discovered via experiments that according to the thermal storage method disclosed in Patent Document No. 3, to release heat, water should be supplied, in the form of vapor or droplets, into a thermal storage material container, including an anhydrate in solid phase, but only a part of the anhydrate in the container reacted with the water and the rest of the anhydrate remained unreacted at the bottom of the container. As a result, the heat that had been stored in the anhydrate could not be recovered sufficiently and the quantity of the thermal output (or released) decreased. Also, if one tried to make the whole anhydrate in the thermal storage material container react with the water, then the layer of the anhydrate should have a reduced thickness. In that case, however, the size of the thermal storage material container should be increased too much and the effective thermal storage density of the thermal storage apparatus would decrease. As used herein, the "effective thermal storage density" refers to the quantity of heat stored in a thermal storage apparatus or a thermal storage system per unit volume (which is a theoretical value). Furthermore, according to this method, when the heat should be released, either water vapor or droplets of water are supplied to the anhydrate (in solid phase) in the thermal storage material container. However, the mixture of the anhydrate and the water thus obtained includes a high percentage of solid and the area of contact between the mixture (i.e., thermal storage material) and the thermal storage material container is small. That is why the heat released from the mixture cannot be transferred efficiently to the thermal storage material container. As a result, the thermal output rate decreases, which is also a problem.
On the other hand, according to the thermal storage method disclosed in Patent Document No. 4, the thermal storage material that stores some heat (such as a calcium chloride tetrahydrate salt) is held in a sheet of ceramic, and therefore, the whole material can be allowed to react with water uniformly in a short time. However, if the amount of the thermal storage material is increased to ensure a sufficient quantity of thermal storage, then the ceramic sheet should have an increased area. In that case, the size of the thermal storage apparatus also increases accordingly, and the effective thermal storage density might decrease. Furthermore, according to this method, when heat needs to be released, the heat is output from the thermal storage material, wrapped in the ceramic sheet, by way of a heat exchange plate. That is why the thermal conductivity between the thermal storage material and the heat exchange plate decreases and eventually the thermal output rate decreases, too.
In order to overcome the problems described above, the present invention has an object of providing a thermal storage method that uses a hydrate, which can increase both the quantity of thermal output and a thermal output rate without decreasing the effective thermal storage density in a thermal storage system.

## MEANS FOR SOLVING THE PROBLEMS

To overcome the problems of the prior art described above, a thermal storage method according to the present invention includes the steps of: (A) putting a first composition, including an n-hydrate (where n is a hydration number) of an inorganic salt in solid phase that has a phase change temperature of 100 °C or less, in a thermal storage material container; (B) heating the first composition to a temperature that is higher than the phase change temperature and removing water contained in the first composition from the thermal storage material container, thereby obtaining a second composition in which an m-hydrate (where m is also a hydration number and $m<n$) of the inorganic salt in solid phase and an aqueous solution of the inorganic salt are both included; (C) stopping removing the water from the thermal storage material container on sensing that the second composition has been obtained; (D) reserving the second composition; and (E) mixing the second composition with water, thereby recovering at least a part of the heat that is stored in the second composition.

According to this method, in the step (B), the first composition is heated and water is removed from the thermal storage material container. Thus, the heat can be stored by not just sensible and latent heat storage techniques but also a chemical heat storage technique based on a difference in concentration of the inorganic salt. Also, in the step (E), heat is released by mixing the second composition with water. That is why there is no need to newly apply any thermal energy during the heat release process. Consequently, the thermal storage density can be increased significantly compared to the conventional latent or chemical heat storage technique.

In addition, according to this method, before the composition in the thermal storage material container turns into a solid phase simple substance, the removal of water from the thermal storage material container is stopped to obtain a second composition in solid-liquid mixed phase. That is why while heat is released by performing the step (E), the solid (i.e., the m-hydrate) included in the second composition is allowed to react with water uniformly, and the decrease in the quantity of thermal output, which would be caused if a part of the solid remained unreacted, can be minimized. As a result, the quantity of thermal output can be increased without making a bulky thermal storage apparatus.

Furthermore, in the step (E), water is further added to the second composition in the solid-liquid mixed phase. That is why the mixture includes a lot of liquid and the area of contact between the mixture (i.e., the thermal storage material) and the thermal storage material container increases. As a result, the thermal conductivity between the thermal storage material and its container, and eventually the thermal output rate while the heat is used, can be increased.

## EFFECTS OF THE INVENTION

According to the present invention, when a thermal storage process is carried out using a hydrate, the second composition and water can be mixed together uniformly during the heat release process, and therefore, the quantity of thermal output can be increased. In addition, the thermal conductivity between the mixture of the second composition and water and the thermal storage material container can be increased. As a result, the thermal output rate can be increased eventually.

On top of that, the quantity of thermal output can be increased without decreasing the effective thermal storage density in a thermal storage system. Consequently, a smaller thermal storage system than a conventional one can be provided.

## BRIEF DESCRIPTION OF DRAWINGS

FIG. **1** schematically shows how thermal storage and heat release processes may be performed according to a first preferred embodiment of the present invention.

FIG. **2** schematically shows how thermal storage and heat release processes may be performed according to a second preferred embodiment of the present invention.

FIGS. **3(a)** and **3(b)** are schematic representations illustrating the results of composition-water mixing experiments in a specific example of the present invention and in a comparative example, respectively.

FIG. **4** is a graph showing the conductivities of respective aqueous solutions that were obtained in the composition-water mixing experiments in the specific example of the present invention and in the comparative example.

FIG. **5** is a graph showing how the thermal storage density changes with the solute concentration of magnesium sulfate.

FIG. **6** is a graph showing how the thermal storage density changes with the solute concentration of sodium thiosulfate.

FIG. **7** is a graph showing how the thermal storage density changes with the solute concentration of calcium chloride.

FIG. **8** is a graph showing how the thermal storage density changes with the solute concentration of calcium bromide.

FIG. **9** is a graph showing how the thermal storage density changes with the solute concentration of zinc nitrate.

FIG. **10** illustrates a general arrangement of a thermal storage system for use in a specific example of the present invention.

FIG. **11** is a schematic cross-sectional view illustrating the configuration of a thermal storage vessel included in the thermal storage system shown in FIG. **10.**

FIG. **12** is a phase diagram of magnesium sulfate and water showing how to perform a thermal storage method in a first specific example of the present invention.

FIG. **13** is a phase diagram of calcium chloride and water showing how to perform a thermal storage method in a second specific example of the present invention.

FIG. **14** is a phase diagram of magnesium sulfate and water showing how to perform a thermal storage method in a third specific example of the present invention.

FIG. **15** is a phase diagram of zinc nitrate and water showing how to perform a thermal storage method in a fourth specific example of the present invention.

## DESCRIPTION OF REFERENCE NUMERALS

| | |
|---|---|
| **T1** | temperature (room temperature) of first composition before thermal storage |
| **2** | temperature of second composition during thermal storage |
| **Tm** | phase change temperature of n-hydrate. |
| **Tm’** | liquidus temperature of first composition |
| **c1** | solute concentration of first composition |
| **c2** | solute concentration of second composition |
| **A, D, E, H** | first composition |
| **B, F** | second composition |
| **10, 11, 14, 20, 24** | thermal storage process |
| **12, 16, 22, 26** | heat release process |
| **51** | thermal storage vessel |
| **51a** | thermal storage material |
| **52** | heating section |
| **53** | external heat source |
| **54** | first condenser |
| **55** | second condenser |
| **56** | water tank |
| **57** | vacuum pump |
| **58** | pump |
| **59** | valve |
| **60** | water removal passage |
| **62** | water supply channel |
| **64** | heat medium passage |
| **65** | heat recovery water channel |
| **66** | thermal storage material container |
| **68, 69** | space in the thermal storage material container |
| **70** | partition |
| **72** | water passage hole |
| **80** | heat exchange tube |
| **100** | thermal storage system |

## BEST MODE FOR CARRYING OUT THE INVENTION

Hereinafter, a thermal storage method according to the present invention will be outlined.

First of all, a first composition, including an n-hydrate (where n is a hydration number) of an inorganic salt in solid phase, is put in a thermal storage material container. The n-hydrate has a phase change temperature of 100 °C or less. Next, this first composition is heated to a temperature that is higher than the phase change temperature of the n-hydrate and water contained in the first composition is removed from the thermal storage material container, thereby obtaining a second composition in which an m-hydrate (where m is also a hydration number that is smaller than that of the n-hydrate) of the inorganic salt and an aqueous solution of the inorganic salt are both included. In this process step, the n-hydrate of the inorganic salt is heated to a temperature exceeding the phase change temperature, thereby storing a quantity of heat corresponding to the sensible heat and latent heat. At the same time, by removing water from the thermal storage material container, a quantity of heat generated due to a difference in the concentration of the solute can be stored. Subsequently, on sensing that the second composition has been obtained, the removal of the water from the thermal storage material container is stopped. For example, the volume of water removed from the thermal storage material container may be detected, and when the volume reaches a predetermined value, the removal of the water may be stopped.

Next, this second composition is stored. And when some heat needs to be used, the second composition is mixed with water in liquid phase, thereby releasing the quantity of heat that has been stored due to the difference in the concentration of the solute. Furthermore, by decreasing the temperature of the composition, already containing the water mixed, to equal to or lower than the phase change temperature of the n-hydrate, the quantity of heat corresponding to the sensible heat and latent heat, which has been stored in the second composition, can also be released. In this case, if heat recovery water is run so as to contact with the thermal storage material container, for example, and if a heat exchange is made between that water and the thermal storage material container, part of the heat quantity released can be recovered. After the heat exchange, the water may be used for a heat-assisted unit such as a hot water supply unit.

When the heat is used, the same amount of water as that of the water removed from the thermal storage material container during the thermal storage process (which will be referred to herein as "reaction water") is preferably supplied into the thermal storage material container. In this case, the reaction water may be supplied into the thermal storage material container either at entirely a time or little by little a number of times. When it gets the first composition (i.e., in solid-liquid mixed phase or in simple liquid phase) again with the reaction water all supplied, this first composition has its temperature decreased to equal to or lower than the phase change temperature again, thereby releasing the reaction heat and the sensible and latent heat. If the reaction water has been supplied entirely at a time, the sensible heat will be used after the hydration reaction is complete. That is why the thermal output rate can be increased irrespective of the rate of the hydration reaction. Also, even if the reaction water needs to be supplied little by little a number of times, part of the reaction water is supplied first to impregnate the solid (i.e., the m-hydrate) with the water and then the rest of the reaction water is supplied. Consequently, the rate of the hydration reaction can also be increased and the thermal output rate can be increased eventually.

According to the present invention, by removing water from the thermal storage material container during the thermal storage process, the water is partially removed from the reaction system between the inorganic salt and the water. Such a removal of water from the reaction system will sometimes be referred to herein as "separation of water" in order to distinguish such a removal from the dehydration of a hydrate.

In this manner, according to the present invention, not only a latent heat process but also a chemical heat storage process based on a concentration difference are adopted in combination. That is why compared to the conventional thermal storage method that uses only a latent heat process or a chemical heat storage process, the quantity of thermal storage can be increased significantly and a thermal storage density that is higher than a latent heat storage density, including a sensible heat, can be achieved. Furthermore, according to the chemical heat storage process based on the concentration difference, there is no need to apply any thermal energy externally during the heat release process unlike the conventional chemical heat storage method. As a result, the heat loss that is unavoidable according to the principle of the conventional chemical heat storage method can be reduced according to the present invention.

Furthermore, according to the method described above, when it is sensed that the second composition in the solid-liquid mixed phase has been obtained, the removal of the water from the thermal storage material container is stopped. Thus, it is possible to prevent the water from being separated so much as to make the composition in the thermal storage material container assume solid phase. In the second composition in the solid-liquid mixed phase, the m-hydrate in solid phase is dispersed in the liquid, and can react uniformly to the water supplied into the thermal storage material container during the heat release process. Consequently, the decrease in the quantity of thermal output (or heat released) due to the residue of an unreacted solid at the bottom of the thermal storage material container can be minimized. Such effects will be described in detail later based on the results of experiments the present inventors carried out.

Besides, according to the method described above, water in liquid phase is mixed with the second composition in solid-liquid mixed phase during the heat release process, and therefore, the mixture includes a lot of liquid and the heat can be conducted efficiently to the thermal storage material container and a heat exchanger by taking advantage of convection. Consequently, the thermal output rate can be increased.

The first composition according to the present invention may be either in solid phase with an n-hydrate of an inorganic salt at room temperature or in solid-liquid mixed phase with an n-hydrate and an aqueous solution of the inorganic salt. Also, if necessary, the first and second compositions may include some additive such as an anticorrosion agent, a phase separation prevention agent or a supercooling prevention agent.

As the inorganic salt, a substance that will generate positive reaction heat during a hydration reaction for producing an n-hydrate based on its m-hydrate and water needs to be used. Also, a substance that has a high thermal storage density based on a concentration difference is preferably used. Specifically, at least one inorganic salt selected from the group consisting of chlorides, bromides, iodides, hydroxides, nitrates, sulfates, thiosulfates, phosphates, borates and acetates may be used. Among other things, magnesium sulfate, calcium chloride and calcium bromide are particularly beneficial in terms of thermal storage density, environment friendliness and cost.

A method for removing water from the thermal storage material container is not particularly limited. For example, water in gas phase may be vaporized off outside of the thermal storage material container by a vaporization technique. In that case, the latent heat vaporized is preferably recovered in the same thermal storage unit through heat exchange.

(EMBODIMENT 1)

Hereinafter, a thermal storage method as a first preferred embodiment of the present invention will be described with reference to the accompanying drawings.

FIG. **1** illustrates an example of thermal storage and release processes according to this preferred embodiment. In FIG. **1**, the abscissa represents the concentration of the composition and the ordinate represents the temperature, and a phase diagram, showing what phases are present in an inorganic salt and water, is shown.

In this example, Composition **A** (with an inorganic salt concentration **c1)** to be an n-hydrate in solid phase at a temperature **T1** is used as the first composition. The temperature **T1** may be equal to room temperature, for example.

In the thermal storage process, first, when the temperature of the n-hydrate is increased from the temperature **T1** to a temperature **T2,** which is higher than the phase change temperature **Tm,** as indicated by the arrow **10,** an m-hydrate in solid phase is produced through the dehydration reaction of the n-hydrate. As a result, Composition **A** enters a solid-liquid mixed phase in which the m-hydrate and an aqueous solution of the inorganic salt are both included. Thereafter, with the temperature **T2** of the thermal storage material maintained as indicated by the arrow **11,** water is removed from the thermal storage material container. And when it is sensed that a predetermined amount of water has been removed, the removal of the water is stopped. In this manner, Composition **B** (with a concentration **c2** (>c1)), which includes the inorganic salt at a higher concentration than Composition **A,** is obtained. The composition **B** thus obtained is in a solid-liquid mixed phase including both the m-hydrate and the aqueous solution of the inorganic salt.

In the heat release process, Composition **B** at the temperature **T2** is mixed with water to obtain Composition **A** in a solid-liquid mixed phase as indicated by the arrow **12,** and then the temperature of Composition **A** is decreased to the temperature **T1** that is lower than the phase change temperature **Tm** of the n-hydrate, thereby turning the composition back into an n-hydrate. The amount of the water to be mixed with the second composition is preferably substantially equal to that of the water removed from the thermal storage material container during the thermal storage process. As described above, when the heat is used, the heat is released in the form of sensible heat and latent heat, and therefore, the thermal output rate does not depend on the rate of reaction between the m-hydrate and the water. That is why compared to the conventional chemical heat storage method, the thermal output rate can be increased.

In this preferred embodiment, the total quantity of heat $\Delta$**H** that can be stored is the sum of the sensible heat $\Delta H_{S1}$ to raise the temperature of the n-hydrate from the temperature **T1** to the phase change temperature **Tm** of the n-hydrate, the latent heat of fusion $\Delta H_{L1}$ of the n-hydrate at the temperature **Tm,** the sensible heat $\Delta H_{S2}$ to raise the temperature of Composition **A** in the solid-liquid mixed phase from Tm to T2 and the reaction heat $\Delta H_{R1}$ generated by increasing the concentration of the inorganic salt with the separation of water from Composition **A**:

$$\Delta H \text{ (total quantity of heat stored)}$$

$$= \Delta H_{S1} + \Delta H_{L1} + \Delta H_{S2} + \Delta H_{R1}$$

This total quantity of heat stored $\Delta$**H** is changeable with the temperature **T1** of Composition **A** before thermal storage, the temperature **T2** of Composition **B** after the thermal storage, and the concentrations **c1** and **c2** of the inorganic salt.

A thermal storage process indicated by the arrows 10 and 11 has been described with reference to FIG. **1.** However, the path of obtaining Composition **B** at the temperature **T2** from Composition **A** at the temperature **T1** is not particularly limited. For example, the water may be separated while Composition **A** is being heated. Likewise, the heat release process is not limited to the path indicated by the arrow **12,** either.

The temperature **T2** of Composition **B** after the thermal storage and the concentration **c2** of the inorganic salt may be appropriately determined such that Composition **B** can assume the solid-liquid mixed phase. Preferably, the temperature **T2** and the concentration **c2** are defined so as to fall within the following ranges.

The temperature **T2** of Composition **B** is preferably higher than room temperature, e.g., within the range of 30 °C to 100 °C, but at least needs to be determined to be higher than the phase change temperature **Tm.** More preferably, the temperature **T2** is less than 100 °**C**. Then, in a chemical heat storage process based on the concentration difference, the water separation reaction heat of a reversible liquid can be used. Also, if a $CO_2$ heat pump is used to heat Composition **A,** it is effective to set the temperature **T2** equal to or lower than 90 °C (e.g., in the vicinity of 80 °C). The reason is that by storing the reaction heat, generated by the hydration reaction, as sensible heat, the thermal storage material in the thermal storage material container can be heated to around 100 °C and the heat can be used according to the hot water supply rate.

In this preferred embodiment, if the temperature **T2** were defined to be less than 100 °**C**, water should be removed from Composition **A** at less than 100 °**C** during the thermal storage process. In that case, if the pressure inside the thermal storage material container is reduced with a vacuum pump and if the water included in Composition **A** in the thermal storage material container is boiled at that temperature less than 100 °**C**, water in gas phase can be removed from the thermal storage material container.

The concentration **c2** of the inorganic salt is preferably controlled such that Composition **B** includes solid at 90 vol% or less. If the solid volume fraction is 90 vol% or less, then Composition **B** has flowability (which defines a flowability limit of a solid-liquid mixed slurry). That is why during the heat release process, the m-hydrate included in Composition **B** can be mixed with water efficiently. The volume fraction described above is more preferably 78 vol% or less, and even more preferably 74 vol% or less. Then, the m-hydrate included in Composition **B** and water can be mixed together more uniformly, thus further increasing the quantity of heat released. Meanwhile, the volume fraction just needs to be at least greater than 0 vol%. In a situation where calcium chloride is used as the inorganic salt, for example, even if the calcium chloride concentration **c2** of Composition **B** is a concentration that allows a solid to precipitate, heat can still be stored due to a difference in solute concentration. On the other hand, if magnesium sulfate is used as the inorganic salt, the volume fraction described above is preferably at least equal to 68 vol%. Then, the concentration difference (c2-c1) between Compositions **A** and **B** can be wide enough to increase the quantity of heat stored.

If a heat pump is used as an external power supply to heat Composition **A,** for example, the phase change temperature **Tm** of the n-hydrate of the inorganic salt is preferably equal to or higher than 30 °**C** but equal to or lower than the heating temperature of the heat pump. Also, if a heat pump is used as an external power supply and if Composition **A** is heated by using water at a normal pressure as a heat medium, then the phase change temperature **Tm** is supposed to be lower than 100 °C. Considering the preferred range of the temperature **T2** described above, the phase change temperature **Tm** is preferably lower than 90 °**C**.

Also, if the temperature of Composition **B** being mixed with water exceeded 100 °**C** due to the mixture, then heat of vaporization would be lost. That is why the loss of the quantity of heat stored can be reduced by stopping supplying water to the thermal storage material container before the temperature reaches 100 °**C**. In that case, after the temperature of the mixture in the thermal storage material container has been decreased to a predetermined temperature (of 70 °**C**, for example) or less, part or all of the rest of the water may be supplied.

In the example illustrated in FIG. **1**, Composition **A** that is in solid phase (i.e., n-hydrate) at room temperature is used as the first composition. Alternatively, Composition **D** that includes both the n-hydrate and the aqueous solution at room temperature may also be used. Such composition **D** may be prepared by mixing the n-hydrate with water.

Even when Composition **D** is used, the thermal storage and release processes may also be performed just as described above. Specifically, in the thermal storage process, the temperature of Composition **D** is increased from T1 (which may be equal to room temperature, for example) to a temperature **T2,** which is higher than the phase change temperature **Tm** of the n-hydrate as indicated by the arrow **14.** After that, water is separated from Composition **D** to obtain Composition **B** in solid-liquid mixed phase including an m-hydrate, which includes a smaller number of water molecules than the n-hydrate, and an aqueous solution. On the other hand, in the heat release process, Composition **B** is mixed with water to obtain Composition **D** and then the temperature of Composition **D** is decreased to the temperature **T1** as indicated by the arrow **16.**

Even when Composition **D** is used, the total quantity of heat Δ **H** that can be stored is also calculated as described above. That is to say, the total quantity of heat stored Δ**H** is the sum of the sensible heat $\Delta H_{S3}$ to raise the temperature of Composition **D** from the temperature **T1** to the phase change temperature **Tm** of the n-hydrate, the latent heat of fusion $\Delta H_{L2}$ of the n-hydrate at the temperature **Tm,** the sensible heat $\Delta H_{S4}$ to raise the temperature of Composition D in the solid-liquid mixed phase from Tm to T2 and the reaction heat $\Delta H_{R2}$ generated by increasing the concentration of the inorganic salt with the separation of water from Composition **D:**

$$\Delta H \text{ (total quantity of heat stored)}$$

$$= \Delta H_{S3} + \Delta H_{L2} + \Delta H_{S4} + \Delta H_{R2}$$

(EMBODIMENT 2)

Hereinafter, a thermal storage method as a second preferred embodiment of the present invention will be described with reference to the accompanying drawings. This preferred embodiment is different from the preferred embodiment described above in that the first composition becomes the second composition by going through a simple liquid phase in the thermal storage process. More specifically, in the preferred embodiment described above, a solid-liquid mixed phase is produced by heating the first composition to the temperature **T2** and the second composition is obtained by separating water from the first composition in the solid-liquid mixed phase. Meanwhile, according to this preferred embodiment, when the first composition is heated to the temperature **T2,** an aqueous solution is produced, and the second composition is obtained by separating water from that aqueous solution.

FIG. **2** illustrates an example of thermal storage and release processes according to this preferred embodiment. In FIG. **2,** the abscissa represents the concentration of the composition and the ordinate represents the temperature, and a phase diagram, showing what phases are present in an inorganic salt and water, is shown.

In this example, Composition **E** (with an inorganic salt concentration **c1**) to be an n-hydrate in solid phase at a temperature **T1** is used as the first composition. The temperature **T1** may be equal to room temperature, for example.

In the thermal storage process, first, the temperature of the n-hydrate is increased from the temperature **T1** to a temperature **T2,** which is higher than the phase change temperature **Tm,** as indicated by the arrow **20.** Then, Composition **E** will have a simple liquid phase. Thereafter, with the temperature of Composition **E** kept equal to T2, water is removed from the thermal storage material container. And when it is sensed that a predetermined amount of water has been removed, the removal of the water is stopped. In this manner, Composition **F** (with a concentration **c2** (>c1)), which includes the inorganic salt at a higher concentration than Composition **E,** is obtained. The composition **F** thus obtained is in a solid-liquid mixed phase including both an m-hydrate, which has a smaller hydration number than the n-hydrate, and the aqueous solution of the inorganic salt.

In the heat release process, Composition **F** at the temperature **T2** is mixed with water to obtain Composition **E** in liquid phase as indicated by the arrow **22,** and then the temperature of Composition **E** is decreased to the temperature **T1** that is lower than the phase change temperature **Tm** of the n-hydrate, thereby turning the composition back into an n-hydrate. The amount of the water to be mixed with Composition **F** is preferably substantially equal to that of the water removed from the thermal storage material container during the thermal storage process. As described above, when the heat is used, the heat is released in the form of sensible heat and latent heat, and therefore, the thermal output rate does not depend on the rate of reaction between the m-hydrate and the water. That is why compared to the conventional chemical heat storage method, the thermal output rate can be increased according to this preferred embodiment.

In this preferred embodiment, a composition including calcium chloride and water at a molar ratio of one to six may be used as Composition **E.** In that case, in the thermal storage process, calcium chloride hexahydrate is heated from the temperature **T1** (which may be equal to room temperature) to the temperature **T2** and water is separated from the composition, thereby obtaining Composition **F** including calcium chloride dihydrate and an aqueous solution of calcium chloride. This thermal storage process is represented by the following reaction formula:

$$CaCl_2{\cdot}6H_2O\ (solid) \Leftrightarrow aCaCl_2/\ (4.03\ to\ 4.43)H_2O\ (aqueous\ solution) + bCaCl_2{\cdot}2H_2O\ (solid) + 2H_2O$$

where the values **a** and **b** are changeable with the temperature **T2** after the thermal storage.

As in the preferred embodiments described above, it is also possible according to this preferred embodiment to store the sensible heat $\mathbf{AH_{S5}}$ to raise the temperature of the n-hydrate from the temperature **T1** to the phase change temperature **Tm** of the n-hydrate, the latent heat of fusion $\Delta\ \mathbf{H_{L3}}$ of the n-hydrate at the temperature **Tm,** the sensible heat $\mathbf{AH_{S6}}$ to raise the temperature of Composition **E** in liquid phase from Tm to T2 and the reaction heat $\Delta\ \mathbf{H_{R3}}$ generated by increasing the concentration of the inorganic salt with the separation of water from Composition **E:**

$$\Delta H\ (total\ quantity\ of\ heat\ stored)$$

$$= \Delta H_{S5} + \Delta H_{L3} + \Delta H_{S6} + \Delta H_{R3}$$

This total quantity of heat stored $\Delta$**H** is changeable with the temperature **T1** of Composition **E** before thermal storage, the temperature **T2** of Composition **F** after the thermal storage, and the concentrations **c1** and **c2** of the inorganic salt.

It should be noted that the thermal storage process does not always follow the path indicated by the arrow **20.** Alternatively, the thermal storage process may take any other path as long as Composition **F** at the temperature **T2** can be obtained from Composition **E** at the temperature **T1.** For example, Composition **F** may also be obtained by removing water from the thermal storage material container while at the same time heating Composition **E** during the thermal storage process. Likewise, the heat release process does not always have to follow the path indicated by the arrow **22** but may take any other path as long as Composition **F** at the temperature T2 can be turned back into Composition **E.**

The concentration **c2** of the inorganic salt in Composition **F** and the temperature **T2** after the thermal storage may be appropriately determined such that the second composition is in the solid-liquid mixed phase. Their preferred ranges are the same as the ones of the preferred embodiment described above. Also, the preferred solid volume fraction range of Composition **F** is also the same as the one described above.

In the example illustrated in FIG. **2,** Composition **E,** which is in solid phase (i.e., n-hydrate) at room temperature, is used as the first composition. Alternatively, a composition that includes two types of hydrates at room temperature may also be used. Still alternatively, Composition **H** that includes both the n-hydrate and an aqueous solution at room temperature may also be used. Such a composition **H** may be prepared by mixing the n-hydrate with water.

In a situation where Composition **H** is used, the thermal storage process is performed as indicated by the arrow **24.** Specifically, Composition **H** is heated from T1 (which may be equal to room temperature, for example) to a temperature **T2,** which is higher than the liquidus temperature **Tm'** of Composition **H,** to make an aqueous solution. Then, water is separated from Composition **H,** thereby obtaining Composition **F** in a solid-liquid mixed phase including an m-hydrate, which has a smaller number of water molecules than the n-hydrate, and an aqueous solution. On the other hand, in the heat release process, Composition **F** in the solid-liquid mixed phase is mixed with water and the temperature is decreased to T1 as indicated by the arrow **26.**

Even when Composition **H** is used, the total quantity of heat Δ **H** that can be stored is also calculated as described above. That is to say, the total quantity of heat stored Δ**H** is the sum of the sensible heat $\Delta H_{S7}$ to raise the temperature of Composition **H** from the temperature **T1** to the phase change temperature **Tm** of the n-hydrate, the latent heat of fusion $\Delta H_{L4}$ of the n-hydrate at the temperature **Tm,** the sensible heat $\Delta H_{S8}$ to raise the temperature of Composition **E** in the liquid phase from Tm to T2 and the reaction heat $\Delta H_{R4}$ generated by increasing the concentration of the inorganic salt with the separation of water from Composition **H:**

$$\Delta H \text{ (total quantity of heat stored)}$$

$$= \Delta H_{S7} + \Delta H_{L4} + \Delta H_{S8} + \Delta H_{R4}$$

As described above, according to the thermal storage methods of the first and second preferred embodiments of the present invention, a higher thermal storage density than a latent heat storage material is achieved particularly in a temperature range in which a heat pump can operate. In addition, since there is no need to apply any energy externally during the heat release process, the quantity of heat stored can be increased substantially. The thermal storage density varies with the type of an inorganic salt included in the first composition and with the temperature **T1** before the thermal storage and the temperature **T2** after the thermal storage. In any case, however, the first and second compositions are preferably controlled so as to double the thermal storage density of sensible heat storage that uses the sensible heat of water.

On top of that, not just can such a high thermal storage density be achieved but also can the thermal output quantity be increased by making the second composition enter the solid-liquid mixed phase during the thermal storage. As a result, the thermal storage system can be smaller than a conventional one. If the conventional thermal storage system is applied to a $CO_2$ heat pump or a hot water supply unit that uses fuel cell cogeneration, then it is difficult to reduce the size of the reservoir drastically enough to install it conveniently. However, according to the thermal storage method of the present invention, a thermal storage system that uses a thermal storage vessel with a smaller volume than such a reservoir instead is realized, thus providing a small hot water supply unit that can be installed conveniently.

*< Experiment of mixing second composition and water >*

According to the present invention, by mixing water with the second composition in the solid-liquid mixed phase during the heat release process, the solid (i.e., m-hydrate) included in the second composition and the water can be mixed together more uniformly than a situation where water is mixed with a composition in solid phase. The present inventors carried out comparative experiments to confirm this effect. The method and results of those experiments will be described below.

In those experiments, calcium chloride was used as the inorganic salt. As a specific example of the present invention, a composition in the solid-liquid mixed phase, including both calcium chloride dihydrate and an aqueous solution of calcium chloride, was prepared. On the other hand, a composition in solid phase, including calcium chloride dihydrate, was prepared as a comparative example. Then, experiments of mixing those compositions with water were carried out.

As a specific example of the present invention, a solid-liquid mixed composition (with a weight of 75.183 g), including calcium chloride dihydrate in solid phase and an aqueous solution of calcium chloride, was prepared by mixing together 45.614 g of calcium chloride anhydride and 29.569 g of water. Next, a beaker with 14.717 g of water was provided and the composition representing the specific example of the present invention was poured into that beaker. As a result, as schematically illustrated in FIG. **3(a),** a solution **31** that appeared homogenous to the naked eyes was obtained. The conductivity of the solution **31** measured 71.5 mS/cm.

Next, based on the conductivity of the solution **31** measured, the mass concentration of calcium chloride in the solution **31** was calculated. The mass concentration in the solution **31** can be obtained based on the results of measurements representing the relation between the mass concentration of calcium chloride and the conductivity as shown in FIG. **4.** As can be seen from FIG. **4,** it was discovered that the conductivity of 71.5 mS/cm of the solution **31** obtained in this experiment corresponded with that of an aqueous solution with a calcium chloride mass concentration of 48% (i.e., the solution **31** had a calcium chloride mass concentration of 48%). This value is close to 51% that was an actual mass concentration of calcium chloride in the beaker. Thus, the present inventors confirmed that almost all of the calcium chloride dihydrate that had been introduced into the beaker was mixed with the water to produce a substantially homogenous calcium chloride aqueous solution.

Meanwhile, 59.382 g of calcium chloride dihydrate was prepared as a composition representing a comparative example and was put into a beaker with 30.015 g of water. As a result, a solution **35** was obtained as schematically illustrated in FIG. **3(b).** But there was a solid precipitate **33** at the bottom of the beaker. The conductivity of the solution **35** measured 156.8 mS/cm. Also, the solid precipitate **35** turned out to be calcium chloride dihydrate. When the precipitate **35** was taken out and checked, it was discovered that compared to the powder of calcium chloride dihydrate in solid phase that had not yet been put into the beaker, the particles had an increased size and a hardened surface.

As in the specific example of the present invention described above, the mass concentration of calcium chloride in the solution **35** was obtained based on the conductivity of the solution **35** measured for the comparative example by reference to the relation between the mass concentration of calcium chloride and the conductivity as shown in FIG. **4.** As a result, it was discovered that the conductivity of 156.8 mS/cm corresponded with that of an aqueous solution with a calcium chloride mass concentration of 34% (i.e., the solution 35 had a calcium chloride mass concentration of 34%). This value is much lower than 51% that was an actual mass concentration of calcium chloride in the beaker. This result was obtained probably because only the surface of the calcium chloride dihydrate powder was hydrated and no water could penetrate deep into the power, thus leaving a lot of calcium chloride dihydrate in solid phase, which could not be dissolved in the water, and eventually decreasing the concentration of calcium chloride in the solution **35.**

Based on the results of these mixture experiments, the present inventors confirmed that by mixing the second composition in the solid-liquid mixed phase with water, the percentage of the hydrate included in the second composition, which had not been reacted with the water but was left as a precipitate, could be reduced significantly compared to mixing the same hydrate in solid phase with water. Thus, we discovered that according to the present invention, the decrease in thermal output quantity, which would have been caused by the residue of the hydrate in the second composition that had not reacted with water, could be minimized.

*< Screening of thermal storage materials >*

The present inventors selected thermal storage materials that can be used effectively as the first composition in the thermal storage method of the present invention. The method of screening and the results will be described below.

First, as for various hydrates having melting points in the range of room temperature to 100 °C, the reaction heat to be generated by separating water from those hydrates was measured. In making the measurements, each of those hydrates was heated to at least its phase separation temperature, and water was separated with that temperature maintained until the concentration of the solute was doubled. After that, the composition obtained by separating the water was mixed with water and its reaction heat was measured.

The results of measurements are shown in the following Table 1. Among the various hydrates shown in Table 1, some hydrates with zero or negative reaction heat cannot store heat even by separating water from them, and therefore, cannot be used as thermal storage materials according to the present invention. On the other hand, hydrates with positive reaction heat can store heat by separating water from them, and can be used as thermal storage materials according to the present invention. Among these materials, hydrates of magnesium sulfate, sodium thiosulfate, calcium chloride, calcium bromide and zinc nitrate, all of which have reaction heat of relatively great magnitudes and little corrosiveness and do not require much caution in handling, were selected as particularly preferred thermal storage materials.

**Table 1**

| Composition of hydrates | Temperature difference ΔT (°C) | Reaction heat ΔH (kJ/kg) |
|---|---|---|
| $LiCl \cdot 2H_2O$ | 55 | 110 |
| $Na_2CO_3 \cdot 10H_2O$ | 7 | 19 |

(continued)

| Composition of hydrates | Temperature difference ΔT (°C) | Reaction heat ΔH (kJ/kg) |
|---|---|---|
| $CaBr_2•6H_2O$ | 60 | 150 |
| $CuCl_2•2H_2O$ | 50 | 100 |
| $LiBr•2H_2O$ | 50 | 100 |
| $Zn (NO_3)_2•6H_2O$ | 35 | 88 |
| $Mn(NO_3)_2•4H_2O$ | 50 | 120 |
| $Na_2HPO_4•12H_2O$ | 1 | 3 |
| $MgHPO_4•3H_2O$ | 20 | 40 |
| $FeCl_3•6H_2O$ | 33 | 86 |
| $CaCl_2•4H_2O$ | 60 | 144 |
| $Fe(NH_4)(SO_4)_2•12H_2O$ | 5 | 14 |
| $CaI_2•6H_2O$ | 50 | 130 |
| $NaHPHO_3•2.5H_2O$ | 15 | 27 |
| $K(CH_3COO)•1.5H_2O$ | 20 | 35 |
| $Ca(NO_3)_2•4H_2O$ | 30 | 72 |
| $La (NO_3)_3•6H_2O$ | 25 | 63 |
| $Na_2SiO_3•9H_2O$ | 12 | 34 |
| $K_3PO_4•7H_2O$ | 25 | 68 |
| $Zn(NO_3)_2•4H_2O$ | 50 | 120 |
| $Fe(NO_3)_3•9H_2O$ | 32 | 90 |
| $MgSO_4•7H_2O$ | 40 | 110 |
| $CoBr_2•6H_2O$ | 50 | 130 |
| $K_2S_2O_3•H_2O$ | 5 | 8 |
| $Na_2S_2O_3•5H_2O$ | 35 | 88 |
| $Na_2HPO_4•7H_2O$ | 0 | 0 |
| $FeBr_2•6H_2O$ | 40 | 104 |
| $NaBr•2H_2O$ | 20 | 40 |
| $MnSO_4•5H_2O$ | 40 | 100 |
| $Zn(NO_3)_2•2H_2O$ | 70 | 140 |
| $Co (NO_3)_2•6H_2O$ | 35 | 88 |
| $NaBO_2•4H_2O$ | 25 | 55 |
| $Na(CH_3COO)•3H_2O$ | 10 | 35 |
| $MnCl_2•4H_2O$ | 50 | 110 |
| $NaHSO_4•H_2O$ | 15 | 27 |
| $FeSO_4•7H_2O$ | 4 | 11 |
| $Fe(NO_3)_3•6H_2O$ | 45 | 113 |
| $NaAl (SO_4)_2•12H_2O$ | 0 | 0 |
| $NaBO_3•4H_2O$ | -10 | -22 |
| $NaH_2PO_4•2H_2O$ | 10 | 20 |

(continued)

| Composition of hydrates | Temperature difference ΔT (°C) | Reaction heat ΔH (kJ/kg) |
|---|---|---|
| $Na_3PO_4$•$12H_2O$ | -10 | -30 |
| $SrCl_2$•$6H_2O$ | 25 | 63 |

Next, for each of the inorganic salts included in those hydrates selected, the relation between the solute concentration (i.e., the concentration of the inorganic salt) and the thermal storage density was analyzed. As used herein, the "thermal storage density" means the quantity of heat stored per unit volume in a situation where water is separated from a composition including an inorganic salt and water to such a concentration as to turn it into solid phase. The quantity of heat stored is represented as the sum of the sensible and latent heat of the composition including the inorganic salt and water and the reaction heat generated by the separation of water. In this case, the quantity of heat stored was calculated at each solute concentration based on the values described in the documents as for the sensible and latent heat and on the measured values as for the reaction heat, respectively.

FIGS. **5** through **9** are graphs each showing how the thermal storage density per unit volume changed with the solute concentration of one of the inorganic salts described above. In FIGS. **5** through **9,** a thermal storage density obtained in a situation where only the sensible and latent heat of a hydrate of that inorganic salt were used (which will be referred to herein as a "comparative density") is indicated by the dashed line parallel to the axis of abscissas of that graph for the purpose of comparison. The comparative densities are obtained by heating a heptahydrate of magnesium sulfate, a pentahydrate of sodium thiosulfate, a hexahydrate of calcium chloride, a hexahydrate of calcium bromide, and a hexahydrate of zinc nitrate from 15 °**C** to 90 °**C**. That is why if the solute concentration of each inorganic salt is adjusted so as to achieve a thermal storage density that is higher than the comparative density indicated by the dashed line, a higher thermal storage density can be achieved compared to a thermal storage method that uses only sensible heat and latent heat.

Specifically, if the composition including magnesium sulfate and water as shown in FIG. **5** is used as the first composition, the concentration of magnesium sulfate is preferably within the range of 36 mass% to 53 mass%. On the other hand, if the composition including sodium thiosulfate and water as shown in FIG. **6** is used, the concentration of sodium thiosulfate is preferably within the range of 52 mass% to 75 mass%. If the composition including calcium chloride and water as shown in FIG. **7** is used, the concentration of calcium chloride is preferably within the range of 47 mass% to 64 mass%. If the composition including calcium bromide and water as shown in FIG. **8** is used, the concentration of calcium bromide is preferably within the range of 58 mass% to 74 mass%. And if the composition including zinc nitrate and water as shown in FIG. **9** is used, the concentration of zinc nitrate is preferably within the range of 51 mass% to 84 mass%.

The following Table 2 summarizes the properties of compositions that achieve the maximum thermal storage densities using the respective inorganic salts described above. The sensible heats shown in Table 2 were calculated on the supposition that the temperature difference was 75 °**C**.

**Table 2**

| Thermal storage material | Specific heat (kJ/kg·K) solid | Specific heat (kJ/kg·K) liquid | Sensible heat (kJ/kg) | Latent heat (kJ/kg) | Reaction heat (kJ/kg) | Thermal storage density (kJ/kg) | Specific gravity | Thermal storage density (kJ/L) |
|---|---|---|---|---|---|---|---|---|
| $MgSO_4$ • $7H_2O$ | 1.7 | 2.8 | 174 | 155 | 182 | 511 | 1.62 | 828 |
| $CaBr_2$ • $6H_2O$ | 1.0 | 1.5 | 101 | 120 | 123 | 344 | 1.91 | 657 |
| $CaCl_2$ • $6H_2O$ | 1.6 | 2.4 | 168 | 192 | 92 | 452 | 1.47 | 664 |
| $Na_2S_2O_3$ • $5H_2O$ | 1.5 | 2.4 | 150 | 202 | 79 | 431 | 1.64 | 707 |
| $Zn(NO_3)_2$ • $6H_2O$ | 1.4 | 2.1 | 144 | 120 | 230 | 494 | 1.74 | 860 |

Hereinafter, specific examples of a thermal storage method according to the present invention will be described.

*(Configuration of thermal storage system)*

First, a configuration for a thermal storage system for use in the specific examples of the present invention to be described below will be described with reference to the accompanying drawings. FIG. **10** illustrates a general arrangement of the thermal storage system and FIG. **11** is schematic cross-sectional view illustrating the configuration of the thermal storage vessel thereof.

As shown in FIG. **10,** the thermal storage system **100** includes: a thermal storage vessel **51** with a good heat insulation property; a heating section **52** and an external heat source **53** for heating a thermal storage material in the thermal storage vessel **51;** a heat medium passage **64** and a pump **58** for circulating a heat medium (such as water) to heat the thermal storage material between the thermal storage vessel **51** and the heating section **52;** a water removal passage **60** and a vacuum pump **57** for removing the water vapor produced from the thermal storage vessel **51**; first and second condensers **54** and **55,** which are arranged on the water removal passage **60** to condense the water vapor, produced from the thermal storage vessel **51**, into water in liquid phase; a water supply channel **62** for supplying water to the thermal storage material in the thermal storage vessel **51;** a valve **59** arranged on the water supply channel **62;** and a heat recovery water passage **65** for passing heat recovery water through the inside of the thermal storage vessel **51** and supplying it to a heat-assisted unit such as a hot water supply unit. The water removal passage **60** is connected to a water tank **56**, which is provided with a sensor (water level sensor) for detecting the water level in the water tank **56** (not shown). Also, the thermal storage system **100** further includes a control section (not shown, either) for stopping the removal of water from the thermal storage vessel **51** by turning OFF the vacuum pump **57** based on the detection result obtained by the water level sensor.

As shown in FIG. **11,** the thermal storage vessel **51** is made up of a plurality of thermal storage material containers **66**, each of which includes a thermal storage material **51a.** In each of those thermal storage material containers **66**, the upper space over the thermal storage material **51a** is split by a partition **70** into a space **68** for reducing the pressure inside the thermal storage material container and a space **69** for supplying water. The vacuum pump **57** described above is spatially connected to the respective spaces **68** of these thermal storage material containers **66** by way of the water removal passage **60**. On the other hand, the water supply channel **62** is connected to the spaces **69.** Thus, the water that has been supplied into the spaces **69** through the water supply channel **62** is poured onto the thermal storage material **51a** through a water passage port **72** that has been cut through the partition **70.** Furthermore, the thermal storage vessel **51** is provided with heat exchange tubes **80** that directly contact with either the surface of the thermal storage material containers **66** or the thermal storage material itself. The heat exchange tubes **80** are also connected to the heat medium passage **64** for passing a heat medium (i.e., water in this example) to heat the thermal storage material **51a** and to the heat recovery water passage **65** for running water that recovers heat from the thermal storage material **51a** when the heat is used. The water that has been supplied from the heating section **52** into this thermal storage vessel **51** by way of the heat medium passage **64** exchanges heat with the thermal storage material **51a** while running down these heat exchange tubes **80** and then goes back to the heating section **52.** Meanwhile, the heat recovery water (such as hot water supplied) is supplied into the thermal storage vessel **51** through the heat recovery water passage **65,** exchanges heat with the thermal storage material **51a** while running up the heat exchange tubes **80** and then is used by a heat-assisted unit (such as a hot water supply unit).

In the specific examples of the present invention to be described below, a $CO_2$ heat pump, for example, was used as the external heat source **53** and the heating section **52** used a $CO_2$ heat medium (at a temperature of 110 **°C**) supplied from the external heat source **53**. The $CO_2$ heat medium supplied from the external heat source **53** moves to the heating section **52,** where the $CO_2$ heat medium runs against the flow of the heat medium (water) that heats the thermal storage material. In this manner, heat exchange is made between the $CO_2$ heat medium and the water.

During the thermal storage process, the heat medium (water) to heat the thermal storage material is heated by the $CO_2$ heat medium in the heating section **52** to as high as 90 °C, runs through the heat medium passage **64** from the heating section **52**, and then flows into the heat exchange tubes **80** of the thermal storage vessel **51,** where the heat medium exchanges heat with the thermal storage material **51a**, thereby heating the thermal storage material **51a**. After having exchanged heat with the thermal storage material **51a,** the water goes back through the heat medium passage **64** toward the heating section **12** again, where the water exchanges heat with the $CO_2$ heat medium.

The water vapor produced from the thermal storage material **51a** by vaporization is directed through the water removal passage **60** toward the first condenser **54,** where the water vapor exchanges heat with, and is condensed by, the heat medium (water) that has passed through the heat exchange tubes **80** of the thermal storage vessel **51** because they are mutually opposite flows. Thereafter, the water vapor is forwarded to the second condenser **55,** where the water vapor exchanges heat with, and is further condensed by, the $CO_2$ heat medium of the $CO_2$ heat pump because they are mutually opposite flows. As a result, the water vapor turns into water in liquid phase. And that water is reserved in the water tank **56.**

On the other hand, when the heat needs to be used, the valve **59** is opened and water is supplied through the water supply channel **62** onto the thermal storage material **51a,** thereby causing the thermal storage material **51a** to generate heat. Meanwhile, heat recovery water is also supplied through the heat recovery water passage **65** into the heat exchange tubes **80,** thereby recovering part of the heat released from the thermal storage material **51a.**

Optionally, to reduce the volume of the water tank **56,** the water tank **56** may be designed so as to drain water once the amount of water reserved there reaches a predetermined level. In that case, temperature sensors for detecting the temperatures of the thermal storage vessel **51** and the first and second condensers **54** and **55** may be provided instead of the water level sensor. Those temperatures may be detected at intervals of several minutes, for example, and the removal of water from the thermal storage material containers **66** may be stopped based on the results of the detection. Specifically, a relative humidity is calculated based on the respective temperatures of the thermal storage vessel **51** and first and second condensers **54** and **55,** a water vaporization rate is calculated based on the relative humidity, and then vaporization rates are integrated with respect to time. In this manner, the total amount of water removed from the thermal storage material containers **66** can be calculated and the solute concentration of the thermal storage material **51a** can be estimated. And when the estimated solute concentration becomes equal to or greater than a predetermined value, the operation of the vacuum pump **57** is stopped, thereby stopping the removal of water.

(EXAMPLE 1)

Hereinafter, specific examples of a thermal storage method according to the present invention will be described with reference to the accompanying drawings.

In a first specific example of the present invention, using a hydrate including magnesium sulfate and water at a molar ratio of one to seven, thermal storage and heat release processes are carried out with the thermal storage system that has already been described with reference to FIGS. **10** and **11**. FIG. **12** is a phase diagram of magnesium sulfate and water, where the thermal storage process of this specific example is indicated by the arrow **90.**

First, magnesium sulfate heptahydrate is put as a first composition **91** into the thermal storage vessel **51**. The temperature of the magnesium sulfate heptahydrate is supposed to be room temperature (of approximately 15 **°C**).

Next, a thermal storage process is carried out by obtaining a second composition **92** in solid-liquid mixed phase at approximately 80 **°C** from the magnesium sulfate heptahydrate **91** at room temperature as indicated by the arrow **90.** The second composition **92** is in solid-liquid mixed phase including both magnesium sulfate monohydrate and an aqueous solution of magnesium sulfate.

Hereinafter, the thermal storage process will be described step by step. First, by running the pump **58,** water is circulated as a heat medium to heat the thermal storage material between the thermal storage vessel **51** and the heating section **52**. Next, by operating the $CO_2$ heat pump (external power supply) **53**, the heating section **52** is made to heat the water, thereby supplying hot water at 90 °C thus obtained to the heat exchange tubes **80** of the thermal storage vessel **51** through the heat medium passage **64.** The heat exchange tubes **80** make a heat exchange between the magnesium sulfate heptahydrate **91** and the hot water, thereby raising the temperature of the magnesium sulfate heptahydrate **91** from room temperature (of 15 **°C**). In this process, the thermal storage material **51a** contained in the thermal storage material containers **66** comes to have a higher temperature in its upper portion (i.e., surface portion) than in its lower portion (i.e., bottom portion). Thus, the temperature at the lower portion of the thermal storage material **51a** is always monitored. And on sensing the temperature exceed 48 **°C**, which is the phase change temperature of magnesium sulfate heptahydrate, the vacuum pump **57** is operated, thereby evacuating the inner space **68** of the thermal storage material containers **66.**

The first composition **91** in the thermal storage material containers **66** has changed from magnesium sulfate heptahydrate in solid phase into a solid-liquid mixed phase at a temperature of 48 °C or more. That is why by evacuating the inner space **68** of the thermal storage material containers **66,** the water contained in the first composition **91** in solid-liquid mixed phase is vaporized by vacuum evaporation. At the surface portion of the thermal storage material **51a**, the temperature is close to 90 **°C,** and therefore, the water is vaporized while boiling at approximately 0.6 atmospheric pressure.

The water vaporized by this evacuation (i.e., water vapor) passes through the water removal passage **60** and then enters the first and second condensers **54** and **55** in this order. Specifically, in the first condenser **54,** heat exchange is made between the water vapor and the water at approximately 40 **°C**, which has passed through the heat exchange tubes **80** of the thermal storage vessel **51** along the heat medium passage **64,** as two opposite flows, thereby condensing a portion of the water vapor. In the second condenser **55,** heat exchange is made between the remaining water vapor and $CO_2$ heat medium at approximately -10 °C that has come from the external heat source (i.e., $CO_2$ heat pump) **53**, thereby cooling the water vapor and turning it into water. The water that has been condensed by these condensers **54** and **55** is once stored in the water tank **56**. In this manner, the water vapor is condensed, the heat of condensation of the water vapor generated by the first condenser **54** is recovered by the heat medium (i.e., water) running from the thermal storage vessel **51** into the heating section **52,** and the heat of condensation of the water vapor generated by the second condenser **55** is recovered by the $CO_2$ heat medium of the $CO_2$ heat pump **53.**

This series of operations is stopped on sensing that the water in the water tank **56** has reached, or exceeded, a predetermined level. Specifically, after the operation of the vacuum pump **57** has been stopped, the piping (i.e., the water removal passage **60**) of the vacuum pump system is opened to the air, thereby raising the pressure in the thermal storage material containers **66** to the atmospheric pressure. In this manner, a second composition **91** in solid-liquid mixed phase can be obtained. Since the thermal storage vessel **51** is a heat insulating container, the second composition **92** will have its temperature maintained until its heat is used.

In this specific example, the second composition **92,** from which water is no longer removed, is supposed to consist of 83 parts by weight of magnesium sulfate and 17 parts by weight of water. This is a solid-liquid mixed phase including both magnesium sulfate monohydrate in solid phase and an aqueous solution including 42 parts by weight of magnesium sulfate and 58 parts by weight of water. Also, in the second composition **92** thus obtained, the volume fraction of solid is approximately 78 vol%.

When the heat is used, the second composition **92** is turned back into the first composition **91** by supplying reaction water (e.g., 0.4 kg of water for 1 kg of thermal storage material) at room temperature through the water supply channel **62**. In this case, magnesium sulfate included in the second composition **92** and the water produce a hydration reaction, thereby generating heat. At the same time, water to be supplied as hot water is run from the heat recovery water channel **65** and passed through the heat exchange tubes **80** of the thermal storage vessel **51** so as to have its temperature raised to 40 **°C** or more. Then the water with the increased temperature is supplied to a heat assisted unit such as a hot water supply unit.

According to the thermal storage method of this specific example, the thermal storage density is 653 kJ/L, which is approximately 2.1 times as high as 313 kJ/L that is the thermal storage density achieved by storing heat in water with the upper portion of the reservoir heated to 90 **°C** but with the lower portion thereof maintained at 15 **°C .** Optionally, the water that has been removed from the thermal storage vessel **51** and then condensed may be stored at a high temperature by using a heat insulating container as the water tank **56.** In that case, if the hot water in the water tank **56** is supplied as reaction water to the second composition **92** when the heat is used, then the thermal storage density described above can be further increased by 126 kJ/L corresponding to the sensible heat. Also, in that case, the water in the water tank **56** may be further heated by the $CO_2$ heat pump and then supplied to the second composition **92.**

The mass concentration of magnesium sulfate in the first composition **91** is not particularly limited. In this specific example, a composition that becomes solid (i.e., heptahydrate in this case) at room temperature is used. Alternatively, a composition that includes magnesium sulfate and water at a molar ratio of one to six may also be used. Still alternatively, a composition that assumes solid-liquid mixed phase, including a solid (such as a hexahydrate or a heptahydrate) and an aqueous solution of magnesium sulfate, at room temperature may also be used.

Likewise, the mass concentration of magnesium sulfate in the second composition **92** is not limited to the concentration of 83% shown in FIG. **12,** either, but may be appropriately determined such that the second composition **92** assumes the solid-liquid mixed phase. Suppose the first composition **91** is a composition including magnesium sulfate and water at a molar ratio of one to seven and the second composition **92** that has stored heat has a temperature of 80 **°C**, for example. In that case, the mass concentration of magnesium sulfate in the second composition **92** has only to surpass the range **93** shown in FIG. **12** (i.e., higher than the concentration of the first composition **91**) and to be lower than the concentration at which it changes into solid phase.

The temperature of the second composition **92** that has stored heat is not limited to 80 **°C**, either, but may be appropriately determined within the range that is higher than the phase change temperature but equal to or lower than 100 **°C.** Preferably, it is equal to or higher than the phase change temperature of its hexahydrate but equal to or lower than 90 **°C.** The reason is as follows. If the temperature of the second composition is equal to or higher than the phase change temperature of its hexahydrate, then the second composition **92** can have its solute concentration increased and the difference in solute concentration between the first and second compositions **91** and **92** can be widened. As a result, a greater quantity of heat can be stored. On the other hand, if the temperature of the second composition is equal to or lower than 90 **°C**, the reaction heat generated by the hydration reaction can be stored as sensible heat as described above.

If the temperature of the second composition **92** that has stored heat is equal to or higher than the phase change temperature of its hexahydrate but equal to or lower than 90 **°C,** the mass concentration of magnesium sulfate in the second composition **92** is preferably 63% to 83%, more preferably 63% to 79%. The reason is that if it is equal to or higher than 63%, the quantity of heat stored due to the difference in solute concentration can be increased. On the other hand, if it is equal to or lower than 79%, then the volume fraction of solid included in the second composition **92** that has stored heat can be decreased. As a result, the second composition **92** and water can be mixed together more uniformly in the heat release process.

(EXAMPLE 2)

A second specific example of the present invention is different from the first specific example described above in that a hydrate, including calcium chloride and water at a molar ratio of one to six, is used in this example.

Hereinafter, a second specific example of a thermal storage method according to the present invention will be described with reference to the accompanying drawings. In the second specific example of the present invention, thermal storage and heat release processes are also carried out with the thermal storage system that has already been described with reference to FIGS. **10** and **11.** FIG. **13** is a phase diagram of calcium chloride and water, where the thermal storage process of this specific example is indicated by the arrow **94.**

First, calcium chloride hexahydrate is put as a first composition **95** into the thermal storage vessel **51.** The temperature of the calcium chloride hexahydrate is supposed to be room temperature (of approximately 15 **°C**).

In a thermal storage process, a second composition **96** in solid-liquid mixed phase at approximately 80 **°C** is obtained from the calcium chloride hexahydrate at room temperature as indicated by the arrow **94.** The second composition **96** is in solid-liquid mixed phase including both calcium chloride dihydrate and an aqueous solution of calcium chloride.

Hereinafter, the thermal storage process will be described step by step. First, the calcium chloride hexahydrate is heated by the same method as the one already described for the first specific example. On sensing that the temperature at the lower portion of the thermal storage material containers **66** has exceeded 30 **°C,** which is the phase change temperature of the calcium chloride hexahydrate, the inner space **68** of the thermal storage material containers **66** starts to be evacuated by the same method as the one already described for the first specific example. The water vapor that has been produced by this evacuation is condensed by the first and second condensers 54 and 55 and then once stored in the water tank **56** as in the first specific example described above.

This series of operations is stopped on sensing that the water in the water tank **56** has reached, or exceeded, a predetermined level. In this specific example, the second composition **96,** from which water is no longer removed, is supposed to consist of 61 parts by weight of calcium chloride and **39** parts by weight of water. This is a solid-liquid mixed phase including both calcium chloride dihydrate in solid phase and an aqueous solution including 60 parts by weight of calcium chloride and 40 parts by weight of water. On the other hand, the second composition **92** includes very little solid and its volume fraction is almost 0 vol%.

When the heat is used, the second composition 96 is turned back into the first composition **95** by supplying reaction water (e.g., 0.16 kg of water for 1 kg of thermal storage material) at room temperature through the water supply channel **62.** In this case, calcium chloride included in the second composition **96** and the water produce a hydration reaction, thereby generating heat. At the same time, water to be supplied as hot water is run from the heat recovery water channel **65** and passed through the heat exchange tubes **80** of the thermal storage vessel **51** so as to have its temperature raised to 40 **°C** or more by making a heat exchange between the water to be supplied as hot water and the thermal storage material. Then the water to be supplied as hot water is supplied to a hot water supply unit.

According to the thermal storage method of this specific example, the thermal storage density is 617 kJ/L, which is approximately twice as high as 313 kJ/L that is the thermal storage density achieved by storing heat in water with the upper portion of the reservoir heated to 90 **°C** but with the lower portion thereof maintained at 15 **°C.** Optionally, the water that has been removed from the thermal storage vessel **51** and then condensed may be stored at a high temperature by using a heat insulating container as the water tank **56**. In that case, if the hot water in the water tank **56** is supplied as reaction water to the thermal storage material **51a** when the heat is used, then the thermal storage density described above can be further increased by 74 kJ/L corresponding to the sensible heat. Also, in that case, the water in the water tank **56** may be further heated by the $CO_2$ heat pump and then supplied to the second composition **96.**

The mass concentration of calcium chloride in the first composition **95** is not particularly limited. In this specific example, a composition that becomes calcium chloride hexahydrate at room temperature is used. Alternatively, a composition that includes calcium chloride, which becomes calcium chloride tetrahydrate at room temperature, and water at a molar ratio of one to four may also be used. Still alternatively, a composition that assumes solid-liquid mixed phase, including a solid (i.e., a hexahydrate) and an aqueous solution of calcium chloride, at room temperature may also be used.

Likewise, the mass concentration of calcium chloride in the second composition **96** is not limited to the concentration of 61% shown in FIG. **13,** either, but may be appropriately determined such that the second composition **96** assumes the solid-liquid mixed phase. Suppose the second composition **96** that has stored heat has a temperature of than 90 **°C**, the reaction heat generated by the hydration reaction can be stored as sensible heat as described above.

If the temperature of the second composition **96** that has stored heat is equal to or higher than the phase change temperature of its tetrahydrate but equal to or lower than 90 **°C**, the mass concentration of calcium chloride in the second composition **96** is preferably equal to or higher than the concentration on the liquidus line but equal to or lower than 74%. The reason is that if it is equal to or lower than 74%, then the volume fraction of solid included in the second composition **96** that has stored heat can be decreased. As a result, the second composition **96** and water can be mixed together more uniformly in the heat release process.

(EXAMPLE 3)

In a third specific example of the present invention, a composition, including magnesium sulfate and water at a molar ratio of one to eight, is used as the first composition. This specific example is different from the specific examples described above in that this composition is 80 **°C**, for example. In that case, the mass concentration of calcium chloride in the second composition **96** has only to surpass the range **97** shown in FIG. **13** (i.e., higher than the concentration on the liquidus line at the temperature after the thermal storage) and to be lower than the concentration at which it changes into solid phase.

The temperature of the second composition **96** that has stored heat is not limited to 80 **°C**, either, but may be appropriately determined within the range that is higher than the phase change temperature but equal to or lower than 100 **°C**. Preferably, it is equal to or higher than the phase change temperature of its tetrahydrate but equal to or lower than 90 **°C**. The reason is as follows. If the temperature of the second composition is equal to or higher than the phase change temperature of its tetrahydrate, then the second composition **96** can have its solute concentration increased and the difference in solute concentration between the first and second compositions **95** and **96** can be widened. As a result, a greater quantity of heat can be stored. On the other hand, if the temperature of the second composition is equal to or lower not in single solid phase but in a solid-liquid mixed phase, including magnesium sulfate heptahydrate and an aqueous solution of magnesium sulfate, at room temperature.

Hereinafter, a third specific example of a thermal storage method according to the present invention will be described with reference to the accompanying drawings. FIG. **14** is a phase diagram of magnesium sulfate and water, where the thermal storage process of this specific example is indicated by the arrow **104.**

First, a first composition **105** (at a temperature of approximately 15 **°C,** for example) in solid-liquid mixed phase, including magnesium sulfate and water at a molar ratio of one to eight, is heated to a temperature higher than 48 **°C,** which is the phase change temperature of magnesium sulfate heptahydrate, by the same method as the one already described for the first specific example. In this case, the latent heat of fusion of the first composition **105** becomes smaller than that of magnesium sulfate heptahydrate itself, but the sensible heat increases because it includes a lot of water. Subsequently, by removing water from the first composition **105**, a second composition **106** at a temperature of 80 **°C,** including 83 parts by weight of magnesium sulfate and 17 parts by weight of water, is obtained as in the first specific example described above. Also, as in the first specific example, the latent heat of vaporization, generated by the evaporation, is recovered as heat of condensation in the heat medium (i.e., water) and in the $CO_2$ heat medium of the $CO_2$ heat pump (external heat source) to heat the thermal storage material.

In the heat release process, when the heat needs to be used, the second composition **106** thus obtained is mixed with an amount of water corresponding to that of the removed water (i.e., 0.44 kg of water for 1 kg of thermal storage material), thereby turning the second composition **106** back into the first composition **105**. In this manner, a quantity of heat corresponding to the reaction heat that was generated during the thermal storage process is released. Furthermore, the temperature of the first composition **105** thus obtained is decreased to the phase change temperature of the magnesium sulfate heptahydrate or less, thereby releasing a quantity of heat corresponding to the latent heat of fusion and the sensible heat. The released heat is recovered in the water to be supplied as hot water by the same method as the one already described for the first specific example.

According to the thermal storage method of this specific example, the thermal storage density is 586 kJ/L if water at room temperature is used as the reaction water to be mixed with the second composition **106** during the heat release process but 726 kJ/L if the hot water stored in the water tank is used as the reaction water.

(EXAMPLE 4)

In a fourth specific example of the present invention, a composition, including zinc nitrate and water at a molar ratio of one to six, is used as the first composition. This composition is a solid (i.e., zinc nitrate hexahydrate) at room temperature.

Hereinafter, a fourth specific example of a thermal storage method according to the present invention will be described with reference to the accompanying drawings. FIG. **15** is a phase diagram of zinc nitrate and water, where the thermal storage process of this specific example is indicated by the arrow **112.**

First, zinc nitrate hexahydrate is heated to a temperature higher than 36 **°C,** which is the phase change temperature of zinc nitrate hexahydrate, thereby obtaining a first composition **113** as an aqueous solution. Subsequently, by removing water from the first composition **113** while heating the first composition **113** in the state of aqueous solution, a second composition **114** in solid-liquid mixed phase is obtained. In the heat release process, the second composition **114** thus obtained is mixed with an amount of water corresponding to that of the water removed during the thermal storage process, thereby turning the second composition **114** back into the first composition **113** in the aqueous solution state. In this manner, a quantity of heat corresponding to the reaction heat that was generated during the thermal storage process is released. Furthermore, the temperature of the first composition **113** in the aqueous solution state is decreased to the phase change temperature of the zinc nitrate hexahydrate or less, thereby releasing a quantity of heat corresponding to the latent heat of fusion and the sensible heat. In this specific example, as the zinc nitrate hexahydrate has a phase change temperature of 36 **°C,** the heat is used as having a temperature lower than 36 **°C.**

Alternatively, the first composition **113** described above may be replaced with a composition that includes zinc nitrate and water at a molar ratio of one to four and that becomes zinc nitrate tetrahydrate (solid) at room temperature. Still alternatively, the first composition **113** described above may also be replaced with a composition **116** that includes zinc nitrate and water at a molar ratio of one to seven and that assumes a solid-liquid mixed phase at room temperature. Even when the composition **116** is used, the composition **116** is also heated to a temperature higher than a liquidus temperature of 33 **°C,** which is the phase change temperature of the composition **116,** in the thermal storage process. Thereafter, water is removed from the composition **116**, thereby obtaining a second composition **114** in solid-liquid mixed phase. In the heat release process, on the other hand, the second composition **114** is mixed with an amount of water corresponding to that of the water removed during the thermal storage process, thereby obtaining a first composition **116** as an aqueous solution. After that, the temperature of the first composition **116** is decreased to 33 **°C** or less. In this specific example, as the thermal storage material has a phase change temperature of 33 **°C**, the heat is used as having a temperature lower than 33 **°C.**

## INDUSTRIAL APPLICABILITY

According to the present invention, by adopting a chemical heat storage process based on a difference in solute concentration in combination with the conventional latent heat process, a thermal storage method that ensures a high thermal storage density can be provided. In the heat release process, there is no need to newly apply any thermal energy externally to promote that process. On top of that, the thermal output quantity and the thermal output rate can be both increased compared to conventional ones.

The present invention is applicable particularly effectively to a thermal storage process that uses a heat source operating in a low temperature range (e.g., 110 °C or less, among other things, in the range of 40 °C to 90 **°C**). It is particularly beneficial to apply the present invention to various energy-saving units such as a $CO_2$ heat pump and a fuel cell cogenerator because the thermal storage vessel of those units can have a reduced size in that case.

## Claims

1. A thermal storage method comprising the steps of:

   (A) putting a first composition, including an n-hydrate (where n is a hydration number) of an inorganic salt in solid phase that has a phase change temperature of 100 °C or less, in a thermal storage material container;
   (B) heating the first composition to a temperature that is higher than the phase change temperature and removing water contained in the first composition from the thermal storage material container, thereby obtaining a second composition in which an m-hydrate (where m is also a hydration number and $m<n$) of the inorganic salt in solid phase and an aqueous solution of the inorganic salt are both included;
   (C) stopping removing the water from the thermal storage material container on sensing that the second composition has been obtained;
   (D) reserving the second composition; and
   (E) mixing the second composition with water, thereby recovering at least a part of the heat that is stored in the second composition.

2. The thermal storage method of claim 1, wherein the step (E) includes using a composition, obtained by mixing the second composition with the water, as the first composition.

3. The thermal storage method of claim 1, wherein the volume fraction of solid in the second composition is greater than 0 vol% but equal to or smaller than 90 vol%.

4. The thermal storage method of claim 1, wherein the step (E) includes mixing the second composition with water in liquid phase.

5. The thermal storage method of claim 1, wherein the step (E) further includes running heat recovery water onto a water channel, which is arranged so as to contact with either the surface of the thermal storage material container or a composition obtained by mixing the second composition with water, thereby making a heat exchange between the surface or the composition and the heat recovery water.

**6.** The thermal storage method of claim 1, wherein the inorganic salt is magnesium sulfate.

**7.** The thermal storage method of claim 1, wherein the inorganic salt is calcium chloride.

**8.** The thermal storage method of claim 1, wherein the inorganic salt is calcium bromide.

**9.** A thermal storage system comprising:

a thermal storage material container that contains a thermal storage material with a hydrate;
a thermal storage material heating section for heating the thermal storage material that is housed in the thermal storage material container;
a water removal passage for removing water in gas phase from the thermal storage material container;
a sensor for sensing the amount of the water that has been removed from the thermal storage material container through the water removal passage;
a control section for stopping the removal of the water through the water removal passage based on a result of detection done by the detector;
a water supply channel for supplying water into the thermal storage material container; and
a heat recovery section for recovering at least a part of the heat that has been stored in the thermal storage material.

**10.** The thermal storage system of claim 9, wherein the water supply channel is used to supply water in liquid phase into the thermal storage material container.

**11.** The thermal storage system of claim 9, further comprising
a condensing section for condensing the water in gas phase, which has been removed from the thermal storage material container through the water removal passage, into liquid phase, and
a water reservoir section for reserving the water that has been condensed by the condensing section.

**12.** The thermal storage system of claim 11, wherein the thermal storage material heating section includes first heating means for heating a heat medium and a first heat exchange section for making a heat exchange between the heat medium that has been heated by the first heating means and the thermal storage material, and
wherein the condensing section includes a second heat exchange section for making a heat exchange between the water in gas phase, which has been removed from the thermal storage material container through the water removal passage, and the heat medium, on which a heat exchange has already been done by the first heat exchange section with the thermal storage material, thereby recovering a part of the heat of condensation of the water in gas phase.

**13.** The thermal storage system of claim 11, wherein the sensor is provided for the water reservoir section.

**14.** The thermal storage system of claim 9, wherein the heat recovery section has a heat recovery water channel for running heat recovery water, and
wherein the heat recovery water channel is connected to a heat exchange tube that is arranged in contact with either the surface of the thermal storage material container or the thermal storage material itself.

*FIG.1*

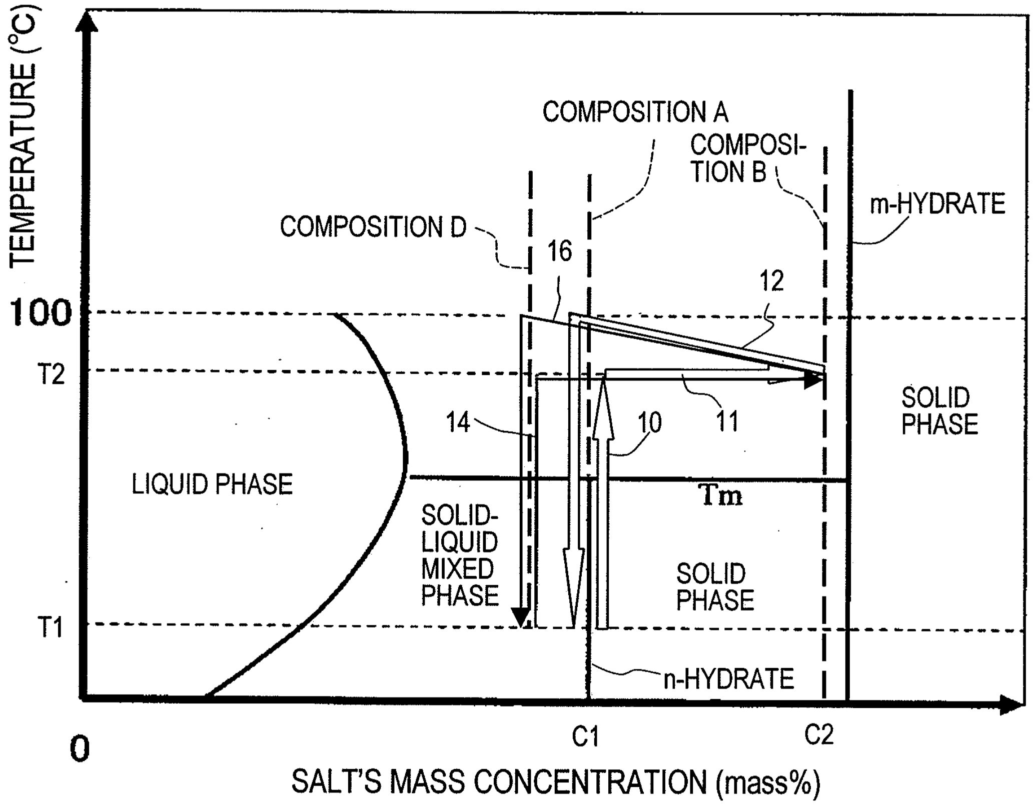
TEMPERATURE (°C)
COMPOSITION A
COMPOSI-
TION B
m-HYDRATE
COMPOSITION D
16
12
100
T2
14
10
11
SOLID
PHASE
LIQUID PHASE
Tm
SOLID-
LIQUID
MIXED
PHASE
SOLID
PHASE
T1
n-HYDRATE
0
C1
C2
SALT'S MASS CONCENTRATION (mass%)

*FIG.2*

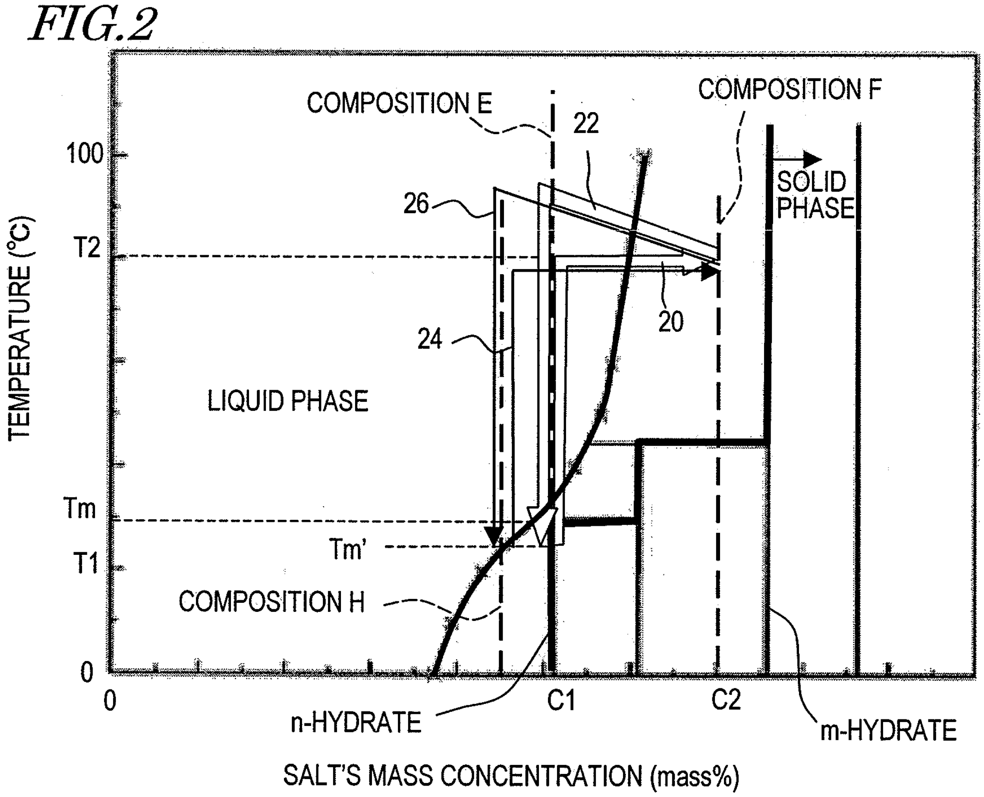
COMPOSITION E
22
COMPOSITION F
100
26
SOLID
PHASE
T2
20
24
TEMPERATURE (°C)
LIQUID PHASE
Tm
Tm'
T1
COMPOSITION H
0
0
C1
C2
n-HYDRATE
m-HYDRATE
SALT'S MASS CONCENTRATION (mass%)

FIG.3

(a)

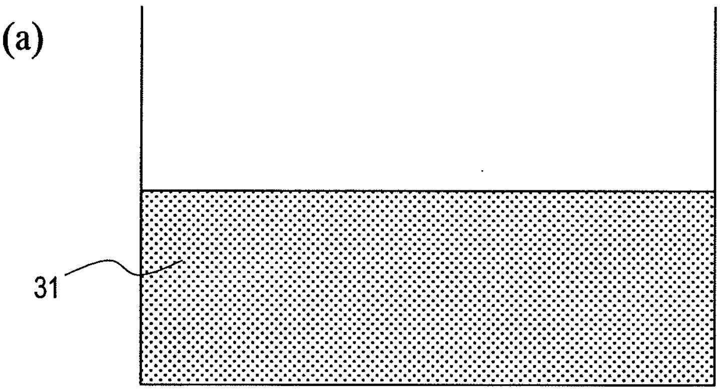
31

(b)

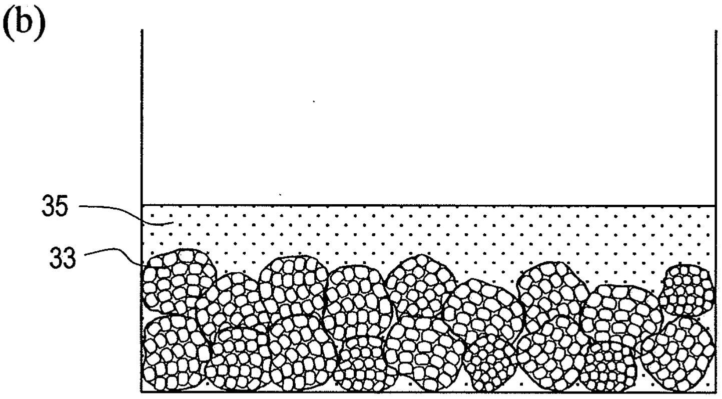
35
33

FIG.4

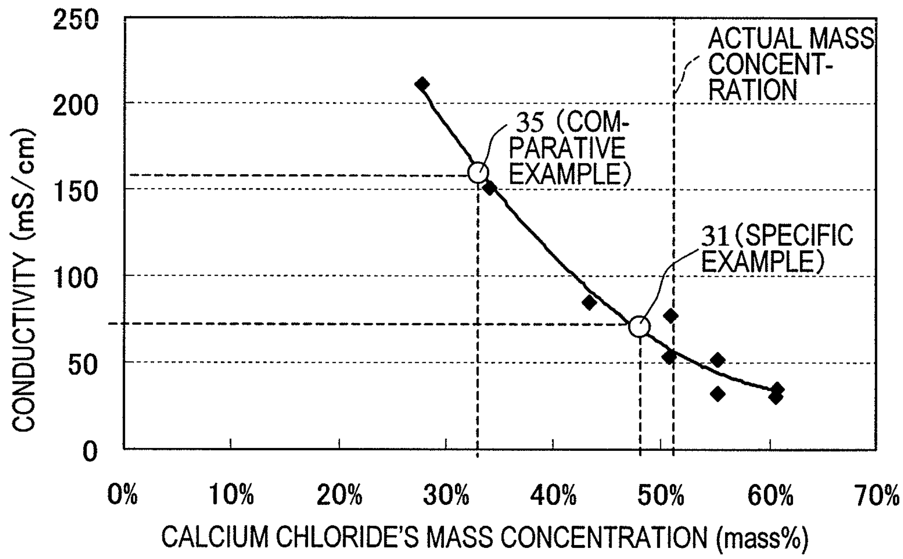
250
200
150
100
50
0
CONDUCTIVITY (mS/cm)
0%
10%
20%
30%
40%
50%
60%
70%
CALCIUM CHLORIDE'S MASS CONCENTRATION (mass%)
ACTUAL MASS CONCENT-RATION
35 (COM-PARATIVE EXAMPLE)
31 (SPECIFIC EXAMPLE)

*FIG.5*

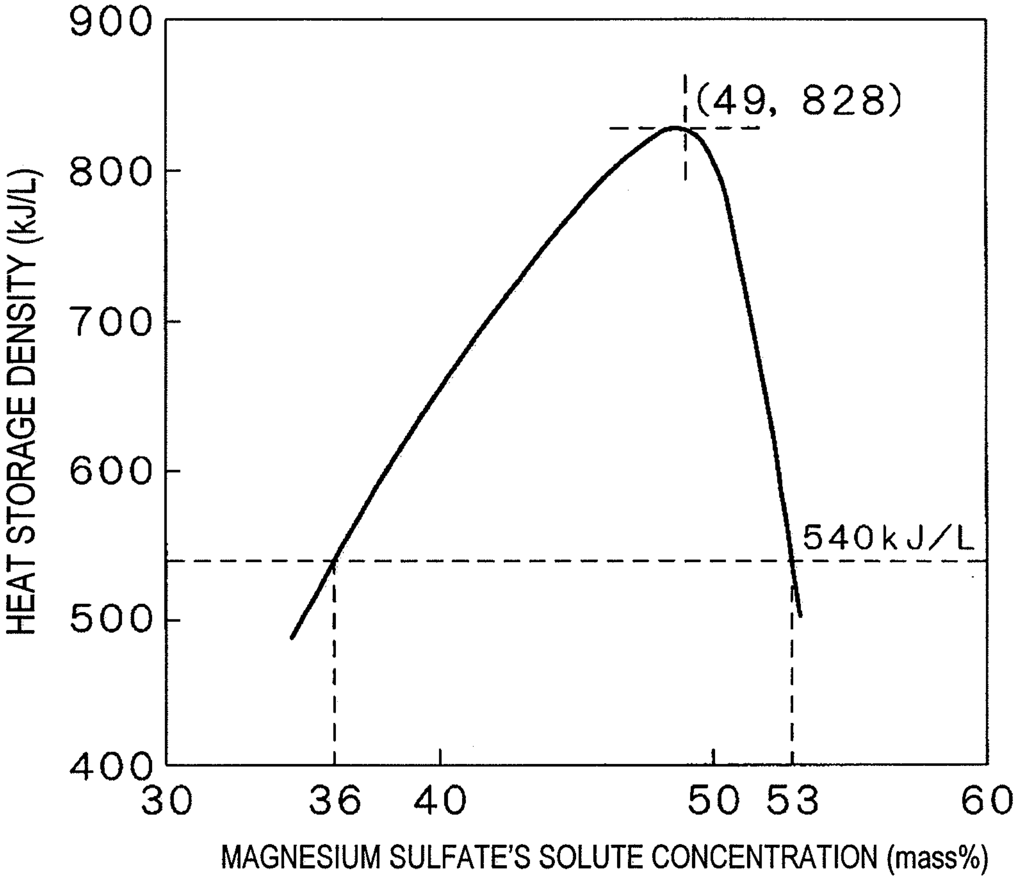
900
800
700
600
500
400
HEAT STORAGE DENSITY (kJ/L)
(49, 828)
540kJ/L
30
36
40
50
53
60
MAGNESIUM SULFATE'S SOLUTE CONCENTRATION (mass%)

*FIG.6*

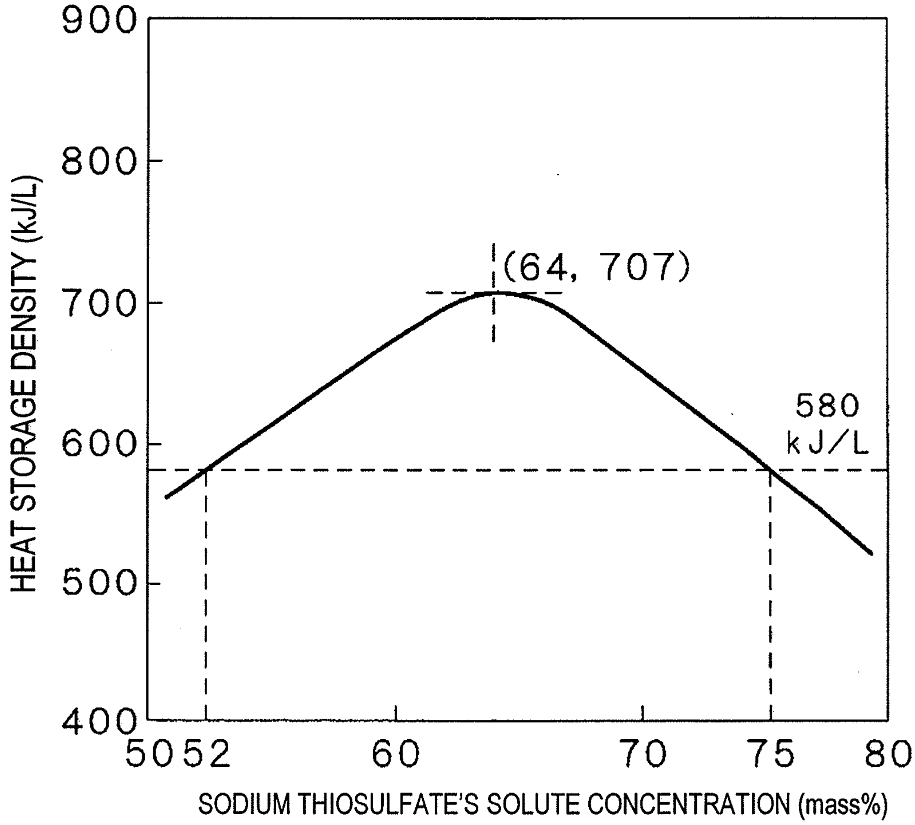
900
800
700
600
500
400
HEAT STORAGE DENSITY (kJ/L)
(64, 707)
580
kJ/L
50
52
60
70
75
80
SODIUM THIOSULFATE'S SOLUTE CONCENTRATION (mass%)

*FIG.7*

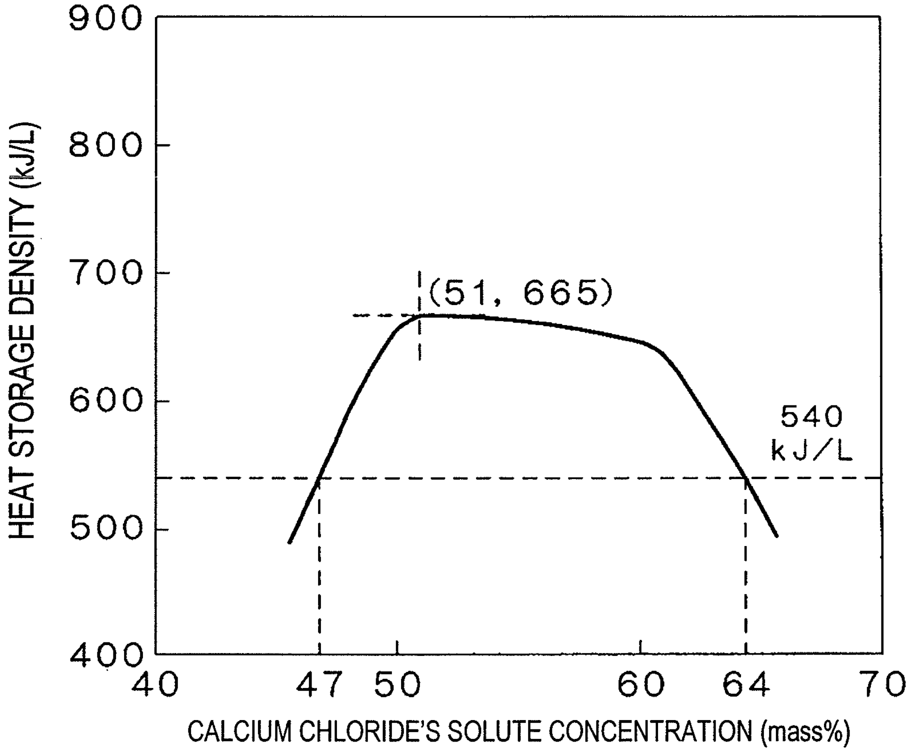
900
800
700
600
500
400
HEAT STORAGE DENSITY (kJ/L)
(51, 665)
540
kJ/L
40
47
50
60
64
70
CALCIUM CHLORIDE'S SOLUTE CONCENTRATION (mass%)

FIG.8

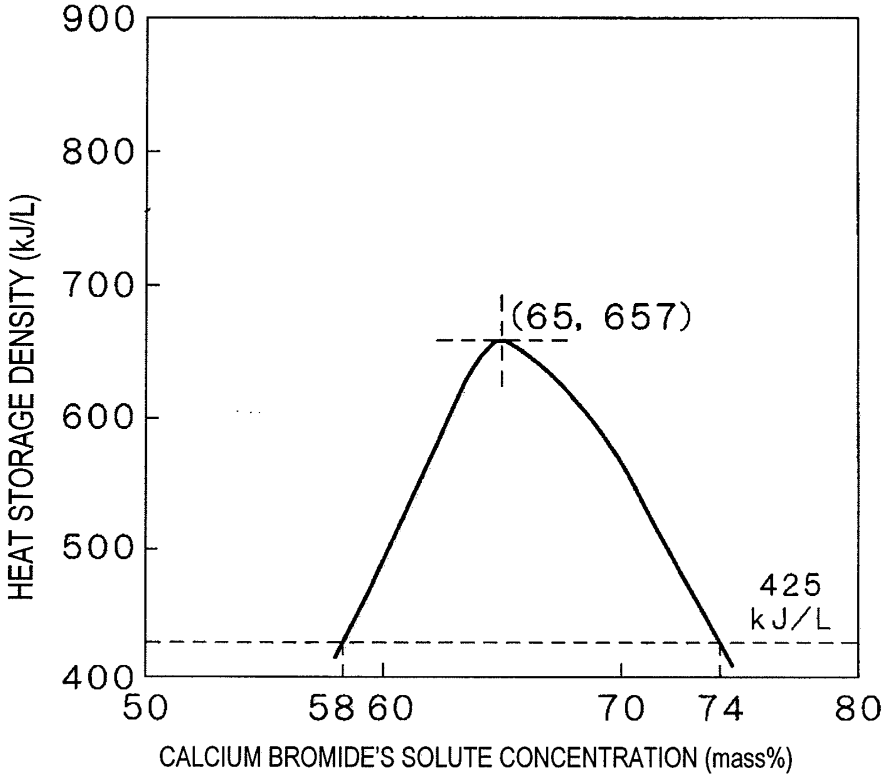
900
800
700
600
500
400
HEAT STORAGE DENSITY (kJ/L)
(65, 657)
425
kJ/L
50
58 60
70
74
80
CALCIUM BROMIDE'S SOLUTE CONCENTRATION (mass%)

FIG.9

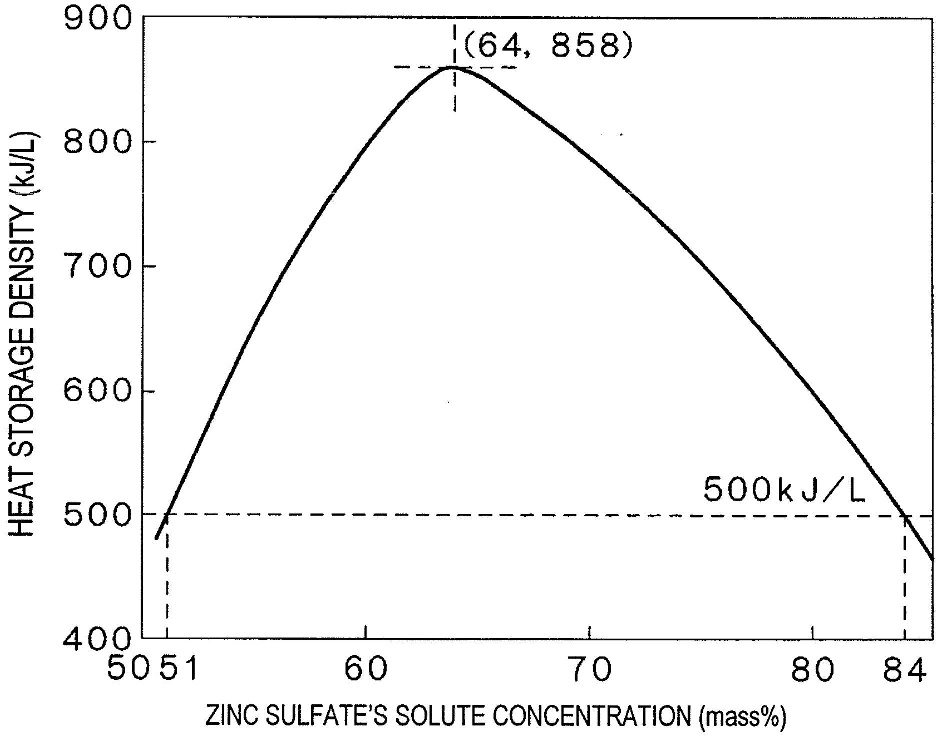
900
800
700
600
500
400
HEAT STORAGE DENSITY (kJ/L)
(64, 858)
500kJ/L
50 51
60
70
80
84
ZINC SULFATE'S SOLUTE CONCENTRATION (mass%)

*FIG.10*

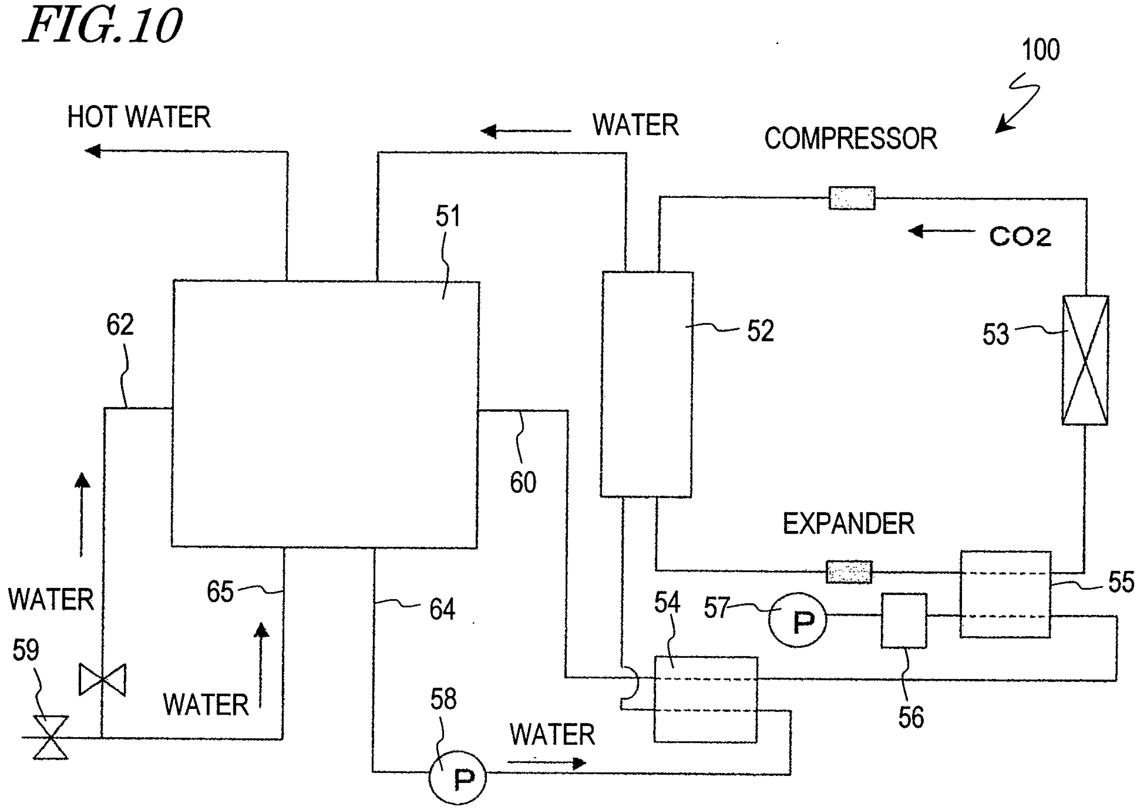
100
HOT WATER
WATER
COMPRESSOR
51
CO2
62
52
53
60
EXPANDER
WATER
65
64
54
57
P
55
59
WATER
58
56
WATER
P

*FIG.11*

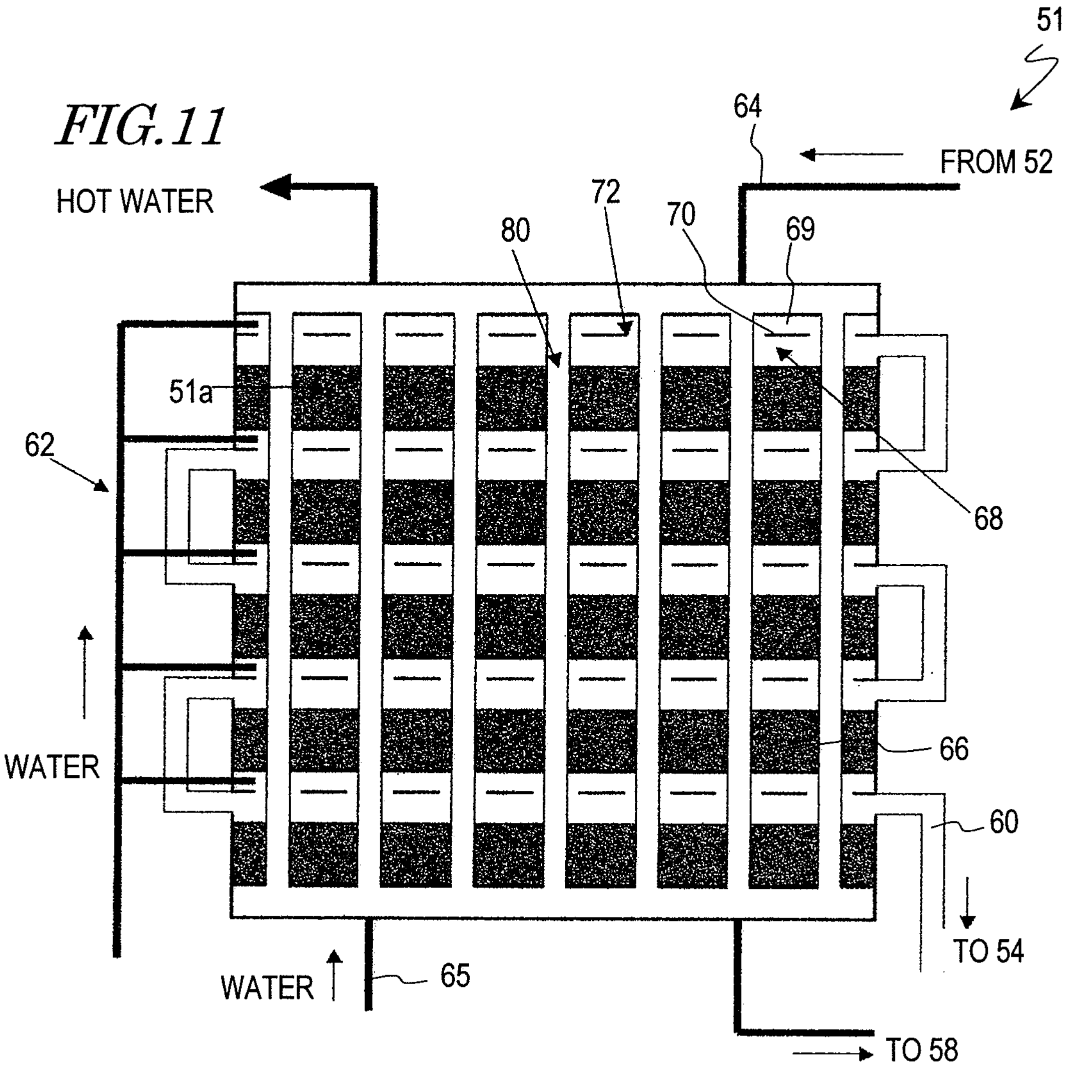
51
64
FROM 52
HOT WATER
72
80
70
69
51a
62
68
WATER
66
60
TO 54
WATER
65
TO 58

*FIG.12*

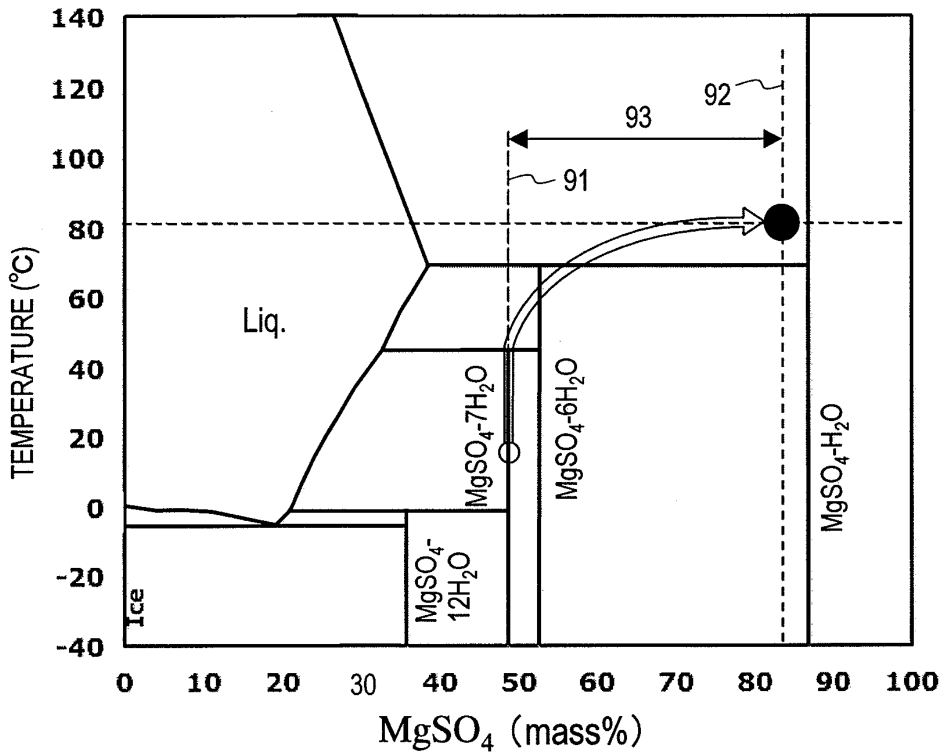
140
120
100
80
60
40
20
0
-20
-40
TEMPERATURE (°C)
0 10 20 30 40 50 60 70 80 90 100
MgSO4 (mass%)
Liq.
Ice
MgSO4-7H2O
MgSO4-6H2O
MgSO4-H2O
MgSO4-12H2O
91
92
93

*FIG.13*

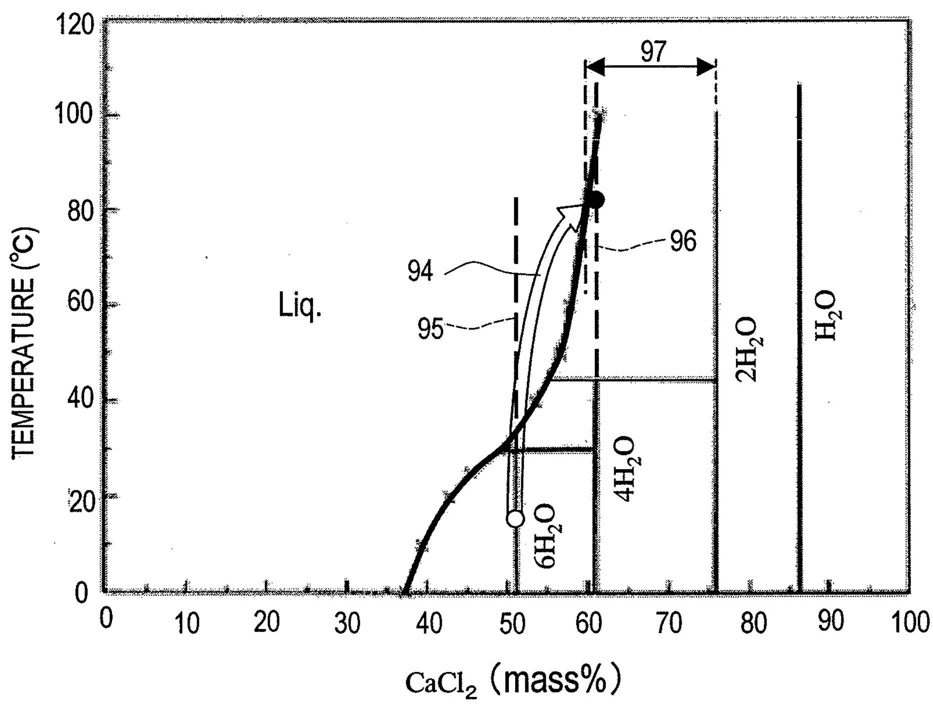
120
100
80
60
40
20
0
TEMPERATURE (°C)
0 10 20 30 40 50 60 70 80 90 100
CaCl2 (mass%)
Liq.
6H2O
4H2O
2H2O
H2O
94
95
96
97

*FIG.14*

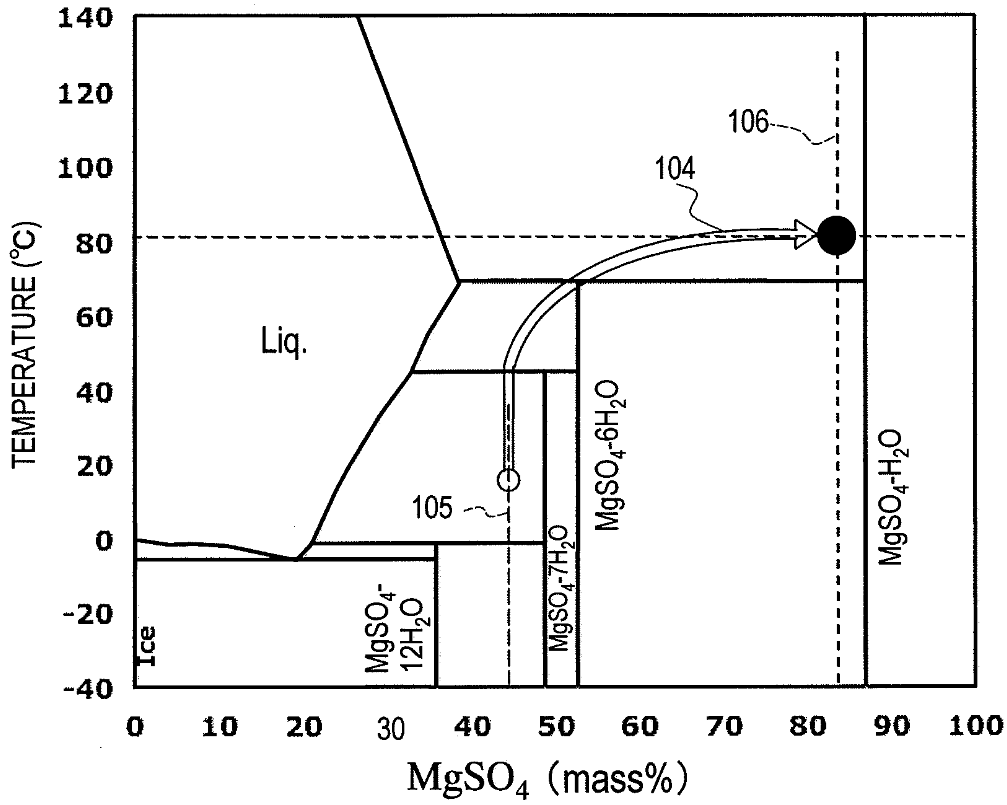
140
120
100
80
60
40
20
0
-20
-40
TEMPERATURE (°C)
0
10
20
30
40
50
60
70
80
90
100
MgSO4 (mass%)
Liq.
Ice
MgSO4-12H2O
MgSO4-7H2O
MgSO4-6H2O
MgSO4-H2O
104
105
106

*FIG.15*

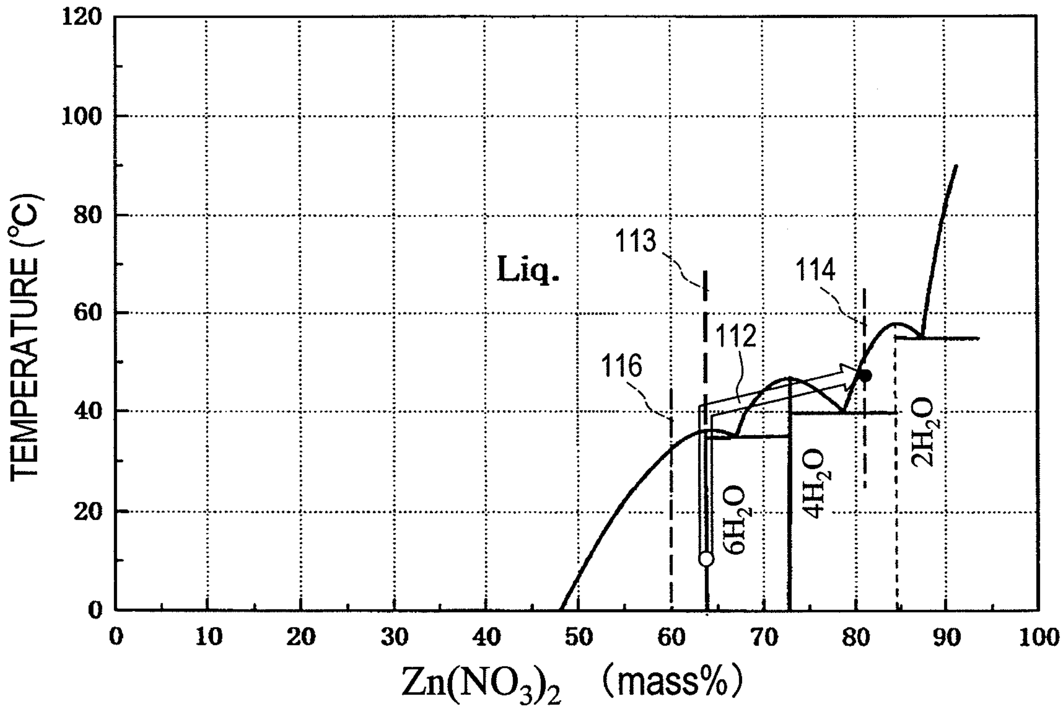
120
100
80
60
40
20
0
TEMPERATURE (°C)
0
10
20
30
40
50
60
70
80
90
100
Zn(NO3)2 (mass%)
Liq.
113
114
112
116
6H2O
4H2O
2H2O

**INTERNATIONAL SEARCH REPORT**

International application No.
PCT/JP2007/053784

A. CLASSIFICATION OF SUBJECT MATTER
*F28D20/00*(2006.01)i, *C09K5/06*(2006.01)i, *F28D20/02*(2006.01)i

According to International Patent Classification (IPC) or to both national classification and IPC

B. FIELDS SEARCHED

Minimum documentation searched (classification system followed by classification symbols)
F28D20/00, C09K5/06, F28D20/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2-93294 A (Super Heat Pump Energy Shuseki System Gijutsu Kenkyu Kumiai), 04 April, 1990 (04.04.90), Full text; Figs. 1 to 2 (Family: none) | 1-3,5-9,14<br>4,10,11,13<br>12 |
| Y | JP 62-275820 A (Toyota Motor Corp.), 30 November, 1987 (30.11.87), Page 2, lower right column, line 8 to page 3, lower left column, line 4; drawings (Family: none) | 4,10,11,13 |
| A | JP 2004-3832 A (Denso Corp.), 08 January, 2004 (08.01.04), Full text; Figs. 1 to 10 (Family: none) | 1-14 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 May, 2007 (22.05.07) | 29 May, 2007 (29.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003507524 PCT
- JP 7006708 A
- JP 2004003832 A
- JP 3244998 A

### Non-patent literature cited in the description

- *Bulletin of the Institute of Electrical Engineers of Japan,* 1981, vol. 101, 15